# EUROPEAN PATENT APPLICATION

(11) **EP 4 050 631 A1**
(43) Date of publication of application: **31.08.2022**
(21) Application number: 20878763.0
(22) Date of filing: 22.10.2020
(51) Int. Cl.: H01G 11/12, H01G 11/78, H01M 50/20

(54) **ELECTRICAL STORAGE DEVICE**

(30) Priority: 23.10.2019 JP 2019192444; 23.10.2019 JP 2019192445; 23.10.2019 JP 2019192447; 23.10.2019 JP 2019192449
(71) Applicant: GS Yuasa International Ltd., Kisshoin, Minami-ku, Kyoto-shi, Kyoto 601-8520 (JP)
(72) Inventor: HIDAKA, Tsuyoshi, Ritto-shi, Shiga 520-3021 (JP); KAWAUCHI, Tomohiro, Ritto-shi, Shiga 520-3021 (JP); KUSUNOKI, Toshiki, Ritto-shi, Shiga 520-3021 (JP); MIYAWAKI, Yasutaka, Kyoto-shi, Kyoto 601-8520 (JP); TOKII, Atsushi, Kyoto-shi, Kyoto 601-8520 (JP)
(74) Representative: Grünecker Patent- und Rechtsanwälte PartG mbB
(86) International application number: PCT/JP2020/039721
(87) International publication number: WO 2021/079933

(57) **Abstract**

An energy storage apparatus (1) includes an energy storage unit (10) including an energy storage device (11), the energy storage apparatus (1) including a substrate unit (20) including a substrate (200) electrically connected to the energy storage unit (10) and a substrate accommodating unit (100) accommodating the substrate (200), the substrate unit (20) being attached to the energy storage unit (10). The substrate accommodating unit (100) includes a gripping unit (115) to grip the energy storage apparatus (1).

## Description

### TECHNICAL FIELD

The present invention relates to an energy storage apparatus including an energy storage device and a substrate.

### BACKGROUND ART

Conventionally, an energy storage apparatus including an energy storage device and a substrate is widely known. Patent Document 1 discloses a configuration (energy storage apparatus) including an assembled battery in which a plurality of unit cells (energy storage devices) are connected in series to output a desired voltage and a control substrate (substrate) that is accommodated in a substrate accommodating unit to control an output voltage based on a voltage detection result of each of the plurality of unit cells.

### PRIOR ART DOCUMENT

### PATENT DOCUMENT

Patent Document 1: JP-A-2013-51190

### SUMMARY OF THE INVENTION

### PROBLEMS TO BE SOLVED BY THE INVENTION

Because the energy storage apparatus including the energy storage device is a heavy object, sometimes the energy storage apparatus is difficult to move.

An object of the present invention is to provide an energy storage apparatus having an easily-movable configuration.

### MEANS FOR SOLVING THE PROBLEM

An energy storage apparatus according to one aspect of the present invention is an energy storage apparatus including an energy storage unit including an energy storage device, the energy storage apparatus comprising a substrate unit including a substrate electrically connected to the energy storage unit and a substrate accommodating unit accommodating the substrate, the substrate unit being attached to the energy storage unit, wherein the substrate accommodating unit includes a gripping unit gripping the energy storage apparatus.

### ADVANTAGES OF THE INVENTION

According to the energy storage apparatus of the present invention, the energy storage apparatus can be easily moved.

### BRIEF DESCRIPTION OF THE DRAWINGS

Fig. 1 is a perspective view illustrating an appearance of an energy storage apparatus according to an embodiment.
Fig. 2 is a perspective view illustrating a configuration when the energy storage apparatus of the embodiment is separated into an energy storage unit and a substrate unit.
Fig. 3 is an exploded perspective view illustrating each component when the energy storage unit of the embodiment is disassembled.
Fig. 4 is an exploded perspective view illustrating each component when the substrate unit of the embodiment is disassembled.
Fig. 5 is a perspective view, a sectional view, and a side view illustrating a configuration of the substrate unit of the embodiment.
Fig. 6 is a sectional view illustrating the configuration of the substrate unit of the embodiment.
Fig. 7 is a perspective view, a front view, and a side view illustrating the configuration in a state where a cover is opened in the substrate unit of the embodiment.
Fig. 8 is a perspective view and a sectional view illustrating a configuration while a substrate holder is rotated with respect to a substrate unit attaching unit of an outer case support of the embodiment.
Fig. 9 is a perspective view illustrating a configuration while a cable is disposed in a cable disposing unit of the substrate unit of the embodiment.
Fig. 10 is a front view illustrating a connection configuration of the cable in the energy storage apparatus of the embodiment.

### MODE FOR CARRYING OUT THE INVENTION

Because the energy storage apparatus including the energy storage device is a heavy object, sometimes the energy storage apparatus is difficult to move. In particular, similarly to the conventional energy storage apparatus disclosed in Patent Document 1, in the configuration in which the substrate accommodating unit in which the assembled battery is accommodated is attached to the assembled battery, there is a possibility that the energy storage apparatus cannot be gripped due to interference of the substrate accommodating unit, or the structure becomes complicated in order to grip the energy storage apparatus while avoiding the substrate accommodating unit. For this reason, the inventor of the present application has found that it may be difficult to move the energy storage apparatus in the conventional energy storage apparatus.

An energy storage apparatus according to one aspect of the present invention is an energy storage apparatus including an energy storage unit including an energy storage device, the energy storage apparatus comprising a substrate unit including a substrate electrically connected to the energy storage unit and a substrate accommodating unit accommodating the substrate, the substrate unit being attached to the energy storage unit, wherein the substrate accommodating unit includes a gripping unit gripping the energy storage apparatus.

Thereby, the energy storage apparatus includes the energy storage unit that includes the energy storage device and the substrate unit that includes the substrate and the substrate accommodating unit, the substrate unit being attached to the energy storage unit, and the substrate accommodating unit of the substrate unit includes the gripping unit to grip the energy storage apparatus. As described above, when the gripping unit is provided in the substrate accommodating unit of the substrate unit, there is no possibility that the substrate unit becomes an obstacle and the energy storage apparatus cannot be gripped or no possibility that a complicated structure is formed so as to grip the energy storage apparatus while avoiding the substrate unit. Thus, the energy storage apparatus can be easily gripped using the gripping unit, so that the energy storage apparatus can be easily moved.

The substrate unit may be attached to the end in the longitudinal direction of the energy storage unit.

Thereby, the substrate unit is attached to the end in the longitudinal direction of the energy storage unit, so that the gripping unit is also attached to the end in the longitudinal direction of the energy storage unit. Thus, the energy storage apparatus that is a heavy load can be gripped in the longitudinal direction, so that the energy storage apparatus can be stably gripped and easily moved.

At least a part of the gripping unit may be disposed at a position closer to a bottom of the energy storage apparatus than at least a part of the energy storage unit.

Thereby, at least a part of the gripping unit of the substrate unit is disposed at a position closer to the bottom of the energy storage apparatus than at least a part of the energy storage unit, so that the movement of the gripping unit with respect to the energy storage unit is regulated when the energy storage apparatus is lifted by holding the gripping unit or the like. When the movement of the gripping unit with respect to the energy storage unit is regulated, the detachment of the substrate unit from the energy storage unit is prevented. As described above, when the energy storage apparatus is moved with the gripping unit held, the substrate unit can be prevented from being detached from the energy storage unit, so that the energy storage apparatus can be easily moved.

A recess may be formed in a surface facing the energy storage unit in the gripping unit.

Thereby, because the recess is formed on the surface of the gripping unit of the substrate unit facing the energy storage unit, the finger of the hand of the operator or the like can be easily inserted between the gripping unit and the energy storage unit, so that the gripping unit can be easily gripped. Thus, the energy storage apparatus can be easily gripped, so that the energy storage apparatus can be easily moved.

The gripping unit may include an inclined surface inclined so as to be away from the energy storage unit toward the bottom of the energy storage apparatus in the surface facing the energy storage unit.

Thereby, because the inclined surface is formed on the surface facing the energy storage unit of the gripping unit of the substrate unit, the finger of the hand of the operator or the like can be easily inserted between the gripping unit and the energy storage unit, so that the gripping unit can be easily gripped. Thus, the energy storage apparatus can be easily gripped, so that the energy storage apparatus can be easily moved.

The present invention can be implemented not only as the energy storage apparatus but also as the substrate accommodating unit including the gripping unit or the substrate unit including the substrate accommodating unit.

Patent Document 2: JP-A-2015-179643 discloses a battery unit (energy storage apparatus) including a battery stack including a plurality of battery cells (energy storage devices), a lid member fixed to the battery stack, and a substrate electrically connected to each terminal of the plurality of battery cells, and the substrate is fixed to the lid member.

A configuration in which work such as maintenance of the substrate can be easily performed by easily accessing the substrate is desirable in the energy storage apparatus including the substrate. Because the conventional energy storage apparatus disclosed in Patent Document 2 has the configuration in which the substrate is fixed to the lid member that is a cover covering the substrate, but does not have the configuration in which the lid member is opened and closed with respect to the substrate, so that the substrate is required to be detached from the lid member in order to access a component provided on the substrate. For this reason, the inventor of the present application has found a problem in that the conventional energy storage apparatus cannot easily perform the work such as the maintenance of the substrate. For this reason, it is also desired to implement the energy storage apparatus capable of easily performing the work such as the substrate maintenance.

An energy storage apparatus according to one aspect of the present invention may include an energy storage unit including an energy storage device and a substrate unit including a substrate electrically connected to the energy storage unit and a substrate accommodating unit that accommodates the substrate, the substrate unit being attached to the energy storage unit, the substrate accommodating unit includes a substrate holder that is disposed between the energy storage unit and the substrate to hold the substrate and a cover attached to the substrate holder, and the cover includes a first cover attaching unit rotatably attached to the substrate holder.

Thereby, the energy storage apparatus includes the energy storage unit that includes the energy storage devices and the substrate unit that includes the substrate and the substrate accommodating unit and is attached to the energy storage unit, and the cover includes the first cover attaching unit rotatably attached to the substrate holder in the substrate accommodating unit. As described above, because the cover is rotatably attached to the substrate holder, the cover can be easily rotated with respect to the substrate holder, so that the cover can be easily opened and closed with respect to the substrate. Thus, the substrate can be easily accessed, so that the work such as maintenance of the substrate can be easily performed.

The first cover attaching unit may be disposed at a position closer to the bottom of the energy storage apparatus than a center position of the cover.

In the substrate accommodating unit, when the first cover attaching unit of the cover is disposed at the position far from the bottom of the energy storage apparatus, the cover is required to be lifted when the cover is rotated with respect to the substrate holder, and sometimes the work such as the maintenance of the substrate is hardly performed. For this reason, the first cover attaching unit is disposed at the position closer to the bottom of the energy storage apparatus than the center position of the cover. Thus, the first cover attaching unit is rotated at the position close to the bottom of the energy storage apparatus, so that the work such as the maintenance of the substrate can be easily performed.

The substrate holder may include a holder attaching unit to which the first cover attaching unit is attached, and the first cover attaching unit may be disposed in a direction from the cover toward the substrate holder with respect to the holder attaching unit.

Thereby, in the substrate accommodating unit, the first cover attaching unit of the cover is disposed in the direction from the cover toward the substrate holder with respect to the holder attaching unit of the substrate holder. Thus, even if the cover is about to come off from the substrate holder, the movement of the first cover attaching unit is regulated by the holder attaching unit, so that the cover can be prevented from coming off from the substrate holder.

The cover may further include a second cover attaching unit that is attached to the substrate holder by engaging with the substrate holder.

Thereby, the cover of the substrate accommodating unit includes the second cover attaching unit that engages with the substrate holder in addition to the first cover attaching unit. Thus, the cover can be attached to the substrate holder by both the first cover attaching unit and the second cover attaching unit, so that the cover can be more firmly attached to the substrate holder.

The cover may include a rotation regulating unit that restricts rotation with respect to the substrate holder.

Thereby, in the substrate accommodating unit, because the cover includes the rotation regulating unit that regulates the rotation with respect to the substrate holder, the rotation of the cover with respect to the substrate holder is regulated. Thus, the cover can be prevented from being excessively rotated to come into contact with another member or to fall from the substrate holder, so that the work such as the maintenance of the substrate can be easily performed.

The present invention can be implemented not only as the energy storage apparatus but also as the substrate accommodating unit including the substrate holder and the cover or the substrate unit including the substrate accommodating unit.

Patent Document 3: JP-A-2002-164029 discloses a battery pack (energy storage apparatus) in which a plurality of battery cells (energy storage devices) are accommodated in a battery accommodating unit in a pack case and a circuit substrate (substrate) is accommodated in the substrate accommodating unit in the pack case.

The conventional energy storage apparatus disclosed in Patent Document 3 has a structure in which a configuration (substrate unit) in which the substrate is accommodated in the substrate accommodating unit is fixedly attached to a configuration (energy storage unit) in which the energy storage device is accommodated in the battery accommodating unit. In the configuration in which the energy storage apparatus includes the energy storage unit and the substrate unit, when the substrate unit can be moved or detachably attached to the energy storage unit, sometimes the work on the substrate can be easily performed. Sometimes detachably attaching the substrate unit to the energy storage unit is easier than directly detachably attaching the substrate to the energy storage unit. Sometimes the maintenance work or the detachably attaching work with respect to the substrate can be easily performed by moving the substrate unit with respect to the energy storage unit. As described above, the inventor of the present application has found that sometimes the conventional energy storage apparatus described above cannot easily perform the work on the substrate. For this reason, there is a need for the energy storage apparatus capable of performing the work on the substrate.

An energy storage apparatus according to one aspect of the present invention may include an energy storage unit including an energy storage device and a substrate unit including a substrate electrically connected to the energy storage unit and a substrate holder disposed between the energy storage unit and the substrate to hold the substrate, the substrate unit being attached to the energy storage unit. The substrate holder may include a first substrate attaching unit rotatably attached to the energy storage unit.

Thereby, the energy storage apparatus includes the energy storage unit that includes the energy storage devices and the substrate unit that includes the substrate and the substrate holder and is attached to the energy storage unit, and the substrate holder includes the first substrate attaching unit rotatably attached to the energy storage unit. As described above, the substrate holder of the substrate unit is rotatably attached to the energy storage unit, so that the substrate unit can be easily rotated with respect to the energy storage unit. Thus, the substrate unit can be easily moved or detachably attached with respect to the energy storage unit, so that the work on the substrate can be easily performed.

The first substrate attaching unit may be disposed at a position closer to the bottom of the energy storage apparatus than a center position of the substrate holder.

When the first substrate attaching unit of the substrate holder is disposed at the position far from the bottom of the energy storage apparatus, the work of lifting the substrate unit is required in rotating the substrate unit with respect to the energy storage unit. For this reason, the first substrate attaching unit is disposed at the position closer to the bottom of the energy storage apparatus than the center position of the substrate holder. Thus, because the first substrate attaching unit is rotated at the position close to the bottom of the energy storage apparatus, the substrate unit can be easily moved or detachably attached with respect to the energy storage unit, and the work on the substrate can be easily performed.

The energy storage unit may include an energy storage attaching unit to which the first substrate attaching unit is attached, and the first substrate attaching unit may be disposed at a position closer to the bottom of the energy storage apparatus than the energy storage attaching unit.

Thereby, the first substrate attaching unit of the substrate holder is disposed at the position closer to the bottom of the energy storage apparatus than the energy storage attaching unit of the energy storage unit, so that the movement of the first substrate attaching unit with respect to the energy storage unit is regulated when the substrate unit is gripped to lift the energy storage apparatus or the like. Thus, the first substrate attaching unit can be prevented from moving with respect to the energy storage unit, and the substrate unit can be prevented from coming off from the energy storage unit.

The substrate holder may further include a second substrate attaching unit that is attached to the energy storage unit by engaging with the energy storage unit.

Thereby, the substrate holder includes the second substrate attaching unit that engages with the energy storage unit in addition to the first substrate attaching unit. Thus, the substrate unit can be attached to the energy storage unit by both the first substrate attaching unit and the second substrate attaching unit, so that the substrate unit can be more firmly attached to the energy storage unit.

The substrate unit may further include a cover attached to the substrate holder, and the cover may include a first cover attaching unit rotatably attached to the substrate holder.

When the substrate unit includes the cover attached to the substrate holder, preferably the substrate can be easily accessed in working on the substrate. For this reason, the first cover attaching unit rotatably attached to the substrate holder is provided in the cover. Thus, the substrate can be easily accessed by rotating the cover to be opened and closed with respect to the substrate holder, so that the work on the substrate can be easily performed.

The present invention can be implemented as not only such the energy storage apparatus but also a combination of the energy storage unit and the substrate holder or a combination of the energy storage unit, the substrate holder, and the cover.

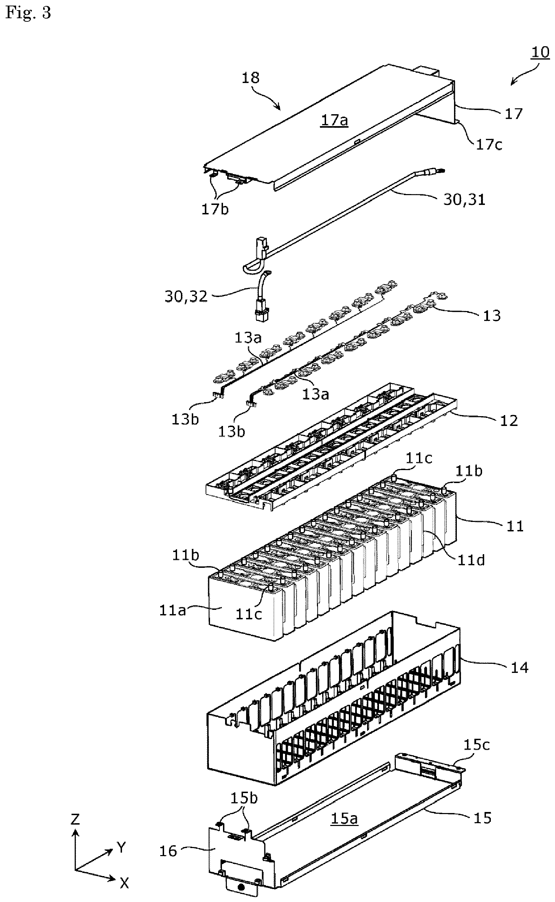

In the energy storage apparatus including the substrate, desirably a configuration in which the substrate can be easily attached and detached during the work such as installation, maintenance, or replacement of the substrate. In the conventional energy storage apparatus disclosed in Patent Document 2, because the substrate is fixed to the lid member by screwing (see Figs. 3 to 5 and the like of Patent Document 2), the substrate cannot be attached or detached until the screw is attached or detached. As described above, the inventor of the present application has found that the conventional energy storage apparatus has a problem in that the substrate cannot be easily attached and detached. For this reason, there is a need for the energy storage apparatus capable of easily attaching and detaching the substrate.

An energy storage apparatus according to one aspect of the present invention includes an energy storage device, a substrate electrically connected to the energy storage device, and a substrate holder that holds the substrate. The substrate holder may include a fixing unit that fixes the substrate in a press-fitted state.

Thereby, in the energy storage apparatus, the substrate holder that holds the substrate includes the fixing unit that fixes the substrate in the press-fitted state. As described above, the substrate is fixed to the substrate holder by the press-fitting, the work of attaching or detaching a screw is not required, so that the substrate can be easily detachably attached to the substrate holder.

A through-hole may be made in the substrate, and the fixing unit may be a protrusion that protrudes from an opposing surface of the substrate of the substrate holder and becomes thinner toward a tip portion, and fix the substrate at a position separated from the opposing surface while being inserted and press-fitted into the through-hole.

Thereby, the fixing unit of the substrate holder is a protrusion that becomes thinner toward the tip portion, and fixes the substrate at the position separated from the opposing surface of the substrate holder while being press-fitted into the through-hole of the substrate. In this way, the tapered protrusion is provided on the substrate holder and press-fitted into the through-hole of the substrate, so that the substrate can be easily detachably attached to the substrate holder with a simple configuration. The substrate is fixed at the position separated from the opposing surface of the substrate holder, so that the component can also be disposed on the back surface (the surface facing the opposing surface) of the substrate.

The fixing unit may fix the substrate in a posture in which a plate surface of the substrate faces a direction intersecting a vertical direction.

When the substrate is fixed by screwing or the like while the plate surface of the substrate faces the direction intersecting the vertical direction, the substrate is hardly detachably attached to the substrate holder. For this reason, the substrate is fixed to the substrate holder with the fixing unit by the press-fitting, so that the substrate can be easily detachably attached to the substrate holder with a simple configuration.

The substrate accommodating unit may further include a cover attached to the substrate holder, and the cover may include a substrate regulating unit that regulates movement of the substrate in a direction toward the cover.

Because the substrate is fixed to the fixing unit of the substrate holder by not the screwing but the press-fitting, there is a risk that the substrate comes off from the fixing unit. For this reason, the substrate regulating unit that regulates the movement of the substrate in the direction toward the cover is provided in the cover attached to the substrate holder. Thus, the substrate fixed to the fixing unit of the substrate holder by the press-fitting can be prevented from coming off from the fixing unit.

The cover may be rotatably attached to the substrate holder.

Thereby, the cover is rotatably attached to the substrate holder, so that the cover can be easily opened and closed with respect to the substrate holder by rotating the cover with respect to the substrate holder. Thus, even when the cover is attached to the substrate holder, the substrate can be easily detachably attached to the substrate holder.

The substrate may include a connector at an end different from an end close to an axis about which the cover rotates with respect to the substrate holder.

Thereby, in the connector of the substrate, the cover is disposed at an end different from the end close to the axis that rotates with respect to the substrate holder, so that the connector or the cable connected to the connector can be prevented from becoming an obstacle when the cover is rotated. Thus, the cover can be easily rotated, for example, the cover can be rotated while the cable is attached to the connector, so that the substrate can be easily detachably attached to the substrate holder.

The present invention can be implemented as not only such the energy storage apparatus but also the substrate holder having the fixing unit or a combination of the substrate holder and the substrate.

Hereinafter, an energy storage apparatus according to an embodiment (including a modification example of the present invention) will be described with reference to the drawings. The embodiment described below illustrates a comprehensive or specific example. Numerical values, shapes, materials, components, dispositions of the components, connection forms of the components, and the like described in the following embodiment are merely examples, and are not intended to limit the present invention. In each of the drawings, dimensions and the like are not strictly illustrated.

In the following description and drawings, an arrangement direction of a pair (a positive electrode side and a negative electrode side) of electrode terminals in one energy storage device, a direction in which the short side surfaces of a case of the energy storage device face each other, or a direction in which the long side surfaces of an outer case of the energy storage unit face each other is defined as an X-axis direction. An arrangement direction of the plurality of energy storage devices, a direction in which the long side surfaces of a case of the energy storage device face each other , a direction in which the short side surfaces of an outer case of the energy storage unit face each other, an arrangement direction of the energy storage unit and the substrate unit, or an arrangement direction of the substrate holder of the substrate unit, the substrate, and the cover is defined as a Y-axis direction. An arrangement direction of an outer case support and an outer case lid of the energy storage unit, an arrangement direction of the energy storage device and a bus bar, an arrangement direction of a case body and a lid of the energy storage device, or a vertical direction is defined as a Z-axis direction. The X-axis direction, the Y-axis direction, and the Z-axis direction are directions intersecting with one another (orthogonal to one another in the embodiment). Although it may be conceivable that the Z-axis direction is not in the vertical direction depending on a mode of use, hereinafter the Z-axis direction is described as the vertical direction for convenience of explanation.

In the following description, an X-axis positive direction indicates an arrow direction side of the X-axis, and an X-axis negative direction indicates an opposite direction to the X-axis positive direction. The same applies to the Y-axis direction and the Z-axis direction. Hereinafter, a Y-axis negative direction may also be referred to as a first direction, and a Z-axis negative direction or a Z-axis positive direction may also be referred to as a second direction. An expression indicating a relative direction or a posture such as parallel and orthogonal strictly also includes the case where the expression is not the direction or the posture. For example, two directions orthogonal to each other means not only that the two directions are completely orthogonal to each other, but also that the two directions are substantially orthogonal to each other, namely, includes a difference of, for example, about several percent.

### (Embodiment)

### [1 General description of energy storage apparatus 1]

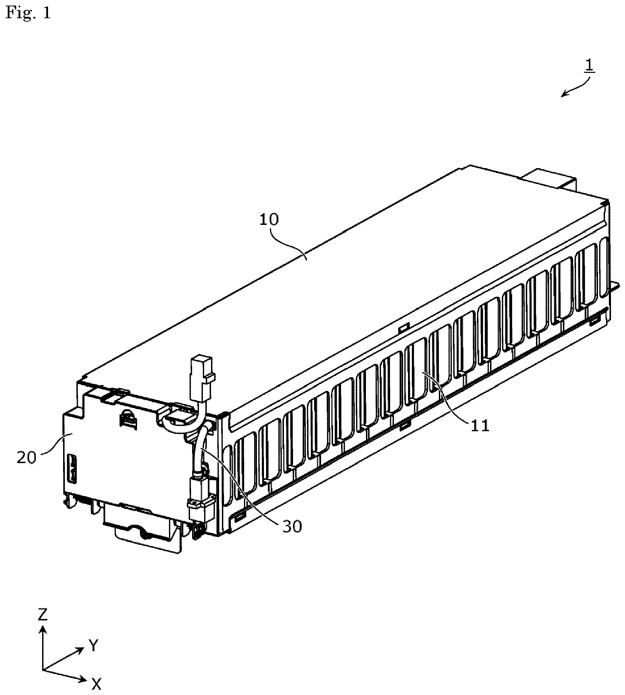

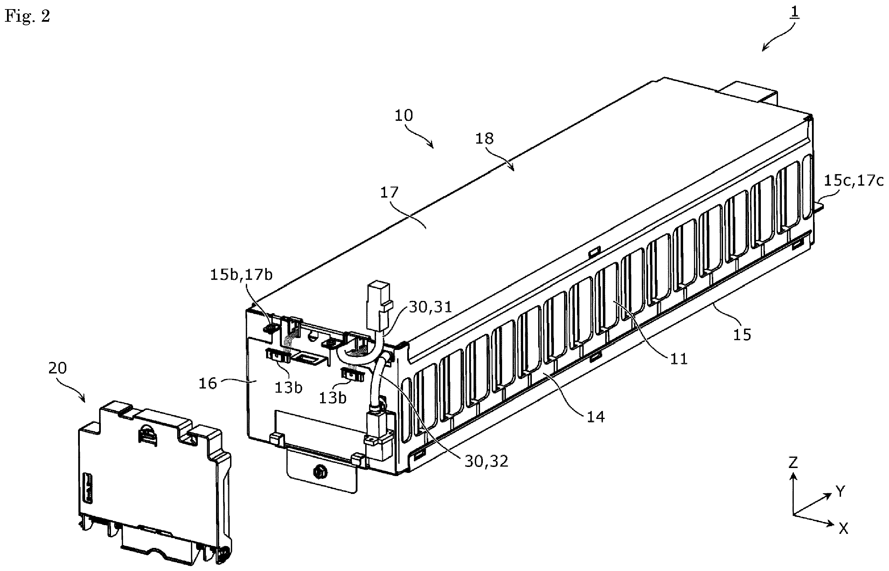

A configuration of an energy storage apparatus 1 according to the embodiment will be described. Fig. 1 is a perspective view illustrating an appearance of the energy storage apparatus 1 of the embodiment. Fig. 2 is a perspective view illustrating a configuration when the energy storage apparatus 1 of the embodiment is separated into an energy storage unit 10 and a substrate unit 20. Fig. 3 is an exploded perspective view illustrating each component when the energy storage unit 10 of the embodiment is disassembled.

The energy storage apparatus 1 is an apparatus capable of charging electricity from the outside and discharging electricity to the outside, and has a substantially rectangular parallelepiped shape in the embodiment. The energy storage apparatus 1 is used for a power storage application, a power supply application, and the like. Specifically, for example, the energy storage apparatus 1 is used as a battery for driving a moving body such as automobiles, motorcycles, watercrafts, vessels, snowmobiles, agricultural machines, construction machines, and railroad vehicles for electric railroad or starting an engine. Examples of the automobiles include an electric vehicle (EV), a hybrid electric vehicle (HEV), a plug-in hybrid electric vehicle (PHEV), and a gasoline automobile. Examples of the railway vehicles for electric railway include a train, a monorail, and a linear motor car. The energy storage apparatus 1 can also be used as a stationary battery or the like used for home use, a generator, or the like.

As illustrated in these drawings, the energy storage apparatus 1 includes the energy storage unit 10 and the substrate unit 20 attached to the energy storage unit 10. First, a configuration of the energy storage unit 10 will be described in detail. The energy storage unit 10 is a battery module (assembled battery) having a substantially rectangular parallelepiped shape elongated in the Y-axis direction. Specifically, the energy storage unit 10 includes a plurality of energy storage devices 11, a bus bar frame 12, a plurality of bus bars 13, an outer case body 14 that accommodates the plurality of energy storage devices 11, the bus bar frame 12, and the plurality of bus bars 13, and an outer case 18 including an outer case support 15 and an outer case lid 17. A cable 30 is connected to the energy storage unit 10. The energy storage unit 10 may include a binding member (end plate, side plate, and the like) that binds the plurality of energy storage devices 11.

The energy storage device 11 is a secondary battery (battery cell) that can charge and discharge the electricity, more specifically is a nonaqueous electrolyte secondary battery such as a lithium ion secondary battery. The energy storage device 11 has a flat, rectangular parallelepiped (prismatic) shape. In the embodiment, sixteen energy storage devices 11 are arrayed in the Y-axis direction. A shape, an arrangement position, a number, and the like of the energy storage device 11 are not particularly limited. The energy storage device 11 is not limited to the nonaqueous electrolyte secondary battery, but may be a secondary battery except for the nonaqueous electrolyte secondary battery or a capacitor. The energy storage device 11 is not the secondary battery, but may be a primary battery that can use stored electricity without being charged by a user. The energy storage device 11 may be a battery in which a solid electrolyte is used. The energy storage device 11 may be a pouch type energy storage device.

Specifically, the energy storage device 11 includes a metal case 11a, and a positive electrode terminal 11b and a negative electrode terminal 11c that are metal electrode terminals are provided in a lid of the case 11a. A spacer 11d is disposed between the adjacent energy storage devices 11. An electrolyte solution filling unit that injects an electrolyte solution, a gas release valve that discharges gas to release pressure during pressure rise in the case 11a, and the like may be provided in the lid of the case 11a. An electrode assembly (also referred to as an energy storage element or a power generating element), a current collector (a positive electrode current collector and a negative electrode current collector), and the like are disposed in the case 11a, and the electrolyte solution (nonaqueous electrolyte) or the like is enclosed in the case 11a. However, the detailed description is omitted.

The positive electrode terminal 11b and the negative electrode terminal 11c are disposed so as to protrude upward (Z-axis positive direction) from the lid of the case 11a. The outermost positive electrode terminal 11b and the outermost negative electrode terminal 11c that are included in the plurality of energy storage devices 11 are connected to the cable 30, which allows the energy storage apparatus 1 to charge and discharge the electricity from and to an outside. The cable 30 is an electric wire (also referred to as a main circuit cable, a power supply cable, a power cable, a power supply line, and a power line) through which current (also referred to as a charge and discharge current and a main current) charging and discharging the energy storage apparatus 1 (energy storage device 11) flows, and includes a positive electrode power supply cable 31 on the positive electrode side and a negative electrode power supply cable 32 on the negative electrode side. That is, among the plurality of energy storage devices 11, the positive electrode power supply cable 31 of the cable 30 is connected to the positive electrode terminal 11b of the energy storage device 11 at an end in the Y-axis positive direction, and the negative electrode power supply cable 32 of the cable 30 is connected to the negative electrode terminal 11c of the energy storage device 11 at an end in the Y-axis negative direction.

The bus bar frame 12 is a flat rectangular member capable of electrically insulating the bus bars 13 from other members and regulating the position of the bus bar 13. The bus bar frame 12 is formed of an insulating member or the like, such as polycarbonate (PC), polypropylene (PP), or polyethylene (PE), which is similar to materials listed in a substrate accommodating unit 100 of the substrate unit 20 described later. Specifically, the bus bar frame 12 is placed above the plurality of energy storage devices 11, and is positioned with respect to the plurality of energy storage devices 11. The bus bar 13 is placed and positioned on the bus bar frame 12. Thus, the bus bar 13 is positioned with respect to the plurality of energy storage devices 11, and is joined to the positive electrode terminals 11b and the negative electrode terminals 11c that are included in the plurality of energy storage devices 11. The bus bar frame 12 also has a function of reinforcing the outer case body 14 as an inner lid of the outer case 18.

The bus bar 13 is a rectangular plate-shaped member that is disposed on the plurality of energy storage devices 11 (on the bus bar frame 12) and electrically connects the electrode terminals of the plurality of energy storage devices 11 to each other. The bus bar 13 is made of metal such as aluminum, and an aluminum alloy, copper, a copper alloy, and stainless steel. In the embodiment, the bus bar 13 connects the positive electrode terminal 11b and the negative electrode terminal 11c of the adjacent energy storage devices 11, thereby connecting the sixteen energy storage devices 11 in series. The connection state of the energy storage device 11 is not limited to the above connection, but series connection and parallel connection may be combined in any way.

A cable 13a is connected to the bus bar 13 or the electrode terminal of the energy storage device 11. The cable 13a is an electric wire (also referred to as a communication cable, a control cable, a communication line, and a control line) for measuring a voltage of the energy storage device 11, for measuring a temperature of the energy storage device 11, or for voltage balancing between the energy storage devices 11. Although a thermistor (not illustrated) measuring the temperature of the energy storage device 11 is disposed on the bus bar 13 or the electrode terminal of the energy storage device 11, the description thereof is omitted. A connector 13b is connected to the end in the Y-axis negative direction of the cable 13a. The connector 13b is a connector connected to a substrate 200 of the substrate unit 20 described later. That is, the cable 13a transmits information such as voltage and temperature of the energy storage device 11 to the substrate 200 of the substrate unit 20 through the connector 13b. The cable 13a also has a function of discharging the energy storage device 11 having the high voltage and balancing the voltages between the energy storage devices 11 by controlling the substrate 200.

The outer case 18 is a rectangular (box-shaped) case (module case) constituting an outer case of the energy storage unit 10. That is, the outer case 18 is disposed outside the energy storage device 11 and the like, and fixes the energy storage device 11 and the like at predetermined positions to protect the energy storage device 11 and the like from an impact and the like. The outer case 18 includes the outer case body 14 constituting a body of the outer case 18, the outer case support 15 supporting the outer case body 14, and the outer case lid 17 constituting a lid (outer lid) of the outer case 18.

The outer case body 14 is a bottomed rectangular cylindrical housing in which an opening is formed on an upper surface. The outer case body 14 is made of an insulating member or the like such as PC, PP, or PE that is the same as the material listed in the substrate accommodating unit 100 of the substrate unit 20 described later. The outer case support 15 and the outer case lid 17 are members that protect (reinforce) the outer case body 14. The outer case support 15 and the outer case lid 17 are made of a metal member such as stainless steel, aluminum, an aluminum alloy, iron, or a plated steel plate. The outer case support 15 and the outer case lid 17 may be made of a member made of the same material, or made of members made of different materials.

The outer case support 15 is a member that supports the outer case body 14 from a lower side (Z-axis negative direction), and includes a bottom 15a, a substrate unit attaching unit 16, and connection units 15b and 15c. The bottom 15a is a flat plate-like and rectangular member that forms a bottom of the energy storage apparatus 1 and extends in parallel to an XY-plane and in the Y-axis direction, and is disposed below the outer case body 14. The substrate unit attaching unit 16 is a flat plate-shaped and rectangular member erected in the Z-axis positive direction from the end in the Y-axis negative direction of the bottom 15a, and the substrate unit 20 is attached to the substrate unit attaching unit 16. The connection unit 15b is a member that is disposed at the end in the Z-axis positive direction of the substrate unit attaching unit 16 and projects in the Y-axis negative direction, and is connected to the outer case lid 17. The connection unit 15c is a member that is erected in the Z-axis positive direction from the end in the Y-axis positive direction of the bottom 15a and projects in the Y-axis positive direction, and is connected to the outer case lid 17.

The outer case lid 17 is a member that is disposed so as to close the opening of the upper surface of the outer case body 14, and includes a top surface 17a and connection units 17b and 17c. The top surface 17a is a flat plate-like and rectangular member that forms an upper surface of the energy storage apparatus 1 and extends in parallel to the XY-plane and in the Y-axis direction, and is disposed above the outer case body 14. The connection unit 17b is a member that is disposed at the end in the Y-axis negative direction of the top surface 17a, extends in the Z-axis negative direction, and protrudes in the Y-axis negative direction, and is connected to the connection unit 15b of the outer case support 15. The connection unit 17c is a member that extends in the Z-axis negative direction from the end in the Y-axis positive direction of the top surface 17a and projects in the Y-axis positive direction, and is connected to the connection unit 15c of the outer case support 15. Thus, the outer case support 15 and the outer case lid 17 are fixed by connecting the connection units 15b and 15c and the connection units 17b and 17c by screwing or the like while the outer case body 14 is sandwiched from the vertical direction.

The substrate unit 20 is a device capable of monitoring the state of the energy storage device 11 included in the energy storage unit 10 and controlling the energy storage device 11. In the embodiment, the substrate unit 20 is a flat rectangular member attached to the end in the longitudinal direction of the energy storage unit 10, namely, the side surface in the Y-axis negative direction of the energy storage unit 10. Thus, operation such as maintenance of the substrate 200 described later in the substrate unit 20 can be easily performed, and an influence of an abnormal state (heat generation, vent, and the like) of the energy storage device 11 in the energy storage unit 10 can be prevented. Specifically, the substrate unit 20 is rotatably attached to a substrate unit attaching unit 16 that is provided on the outer case support 15 included in the outer case 18 of the energy storage unit 10. The configuration of the substrate unit 20 will be described in detail below.

### [2 Description of configuration of substrate unit 20]

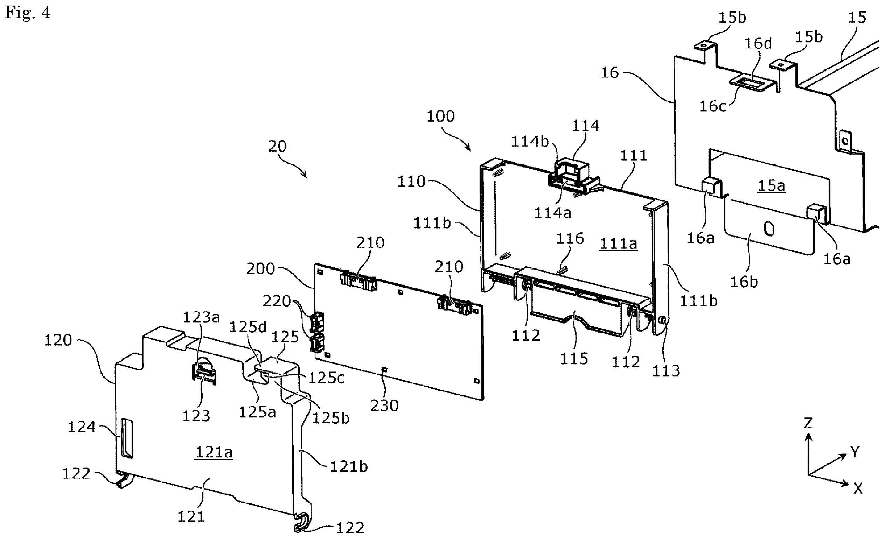

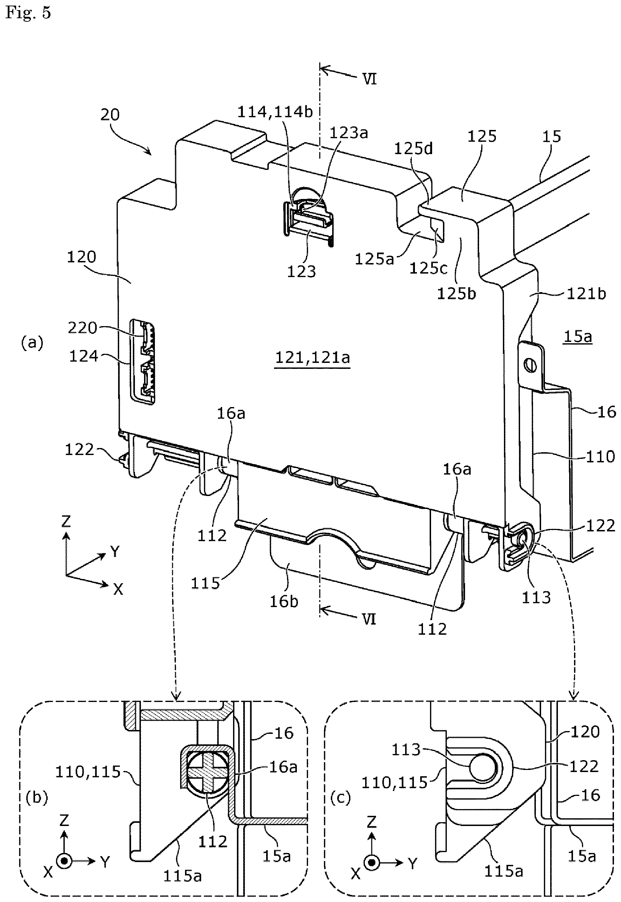

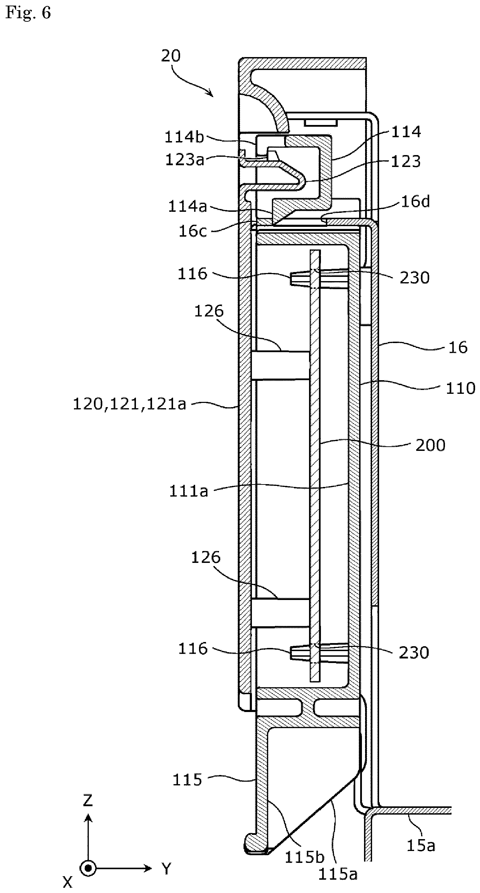

Fig. 4 is an exploded perspective view illustrating each component when the substrate unit 20 of the embodiment is disassembled. Fig. 5 is a perspective view, a sectional view, and a side view illustrating a configuration of the substrate unit 20 of the embodiment. Specifically, a part (a) of Fig. 5 is a perspective view illustrating the configuration while the substrate unit 20 in Fig. 2 is attached to the substrate unit attaching unit 16 of the outer case support 15. Apart (b) of Fig. 5 is a sectional view illustrating an attachment configuration of the substrate unit attaching unit 16 and a substrate holder 110. Apart (c) of Fig. 5 is a side view illustrating an attachment configuration of the substrate holder 110 and a cover 120. Fig. 6 is a sectional view illustrating the configuration of the substrate unit 20 of the embodiment. Specifically, Fig. 6 is the sectional view illustrating the configuration when the substrate unit 20 in the part (a) of Fig. 5 is cut along a VI-VI section.

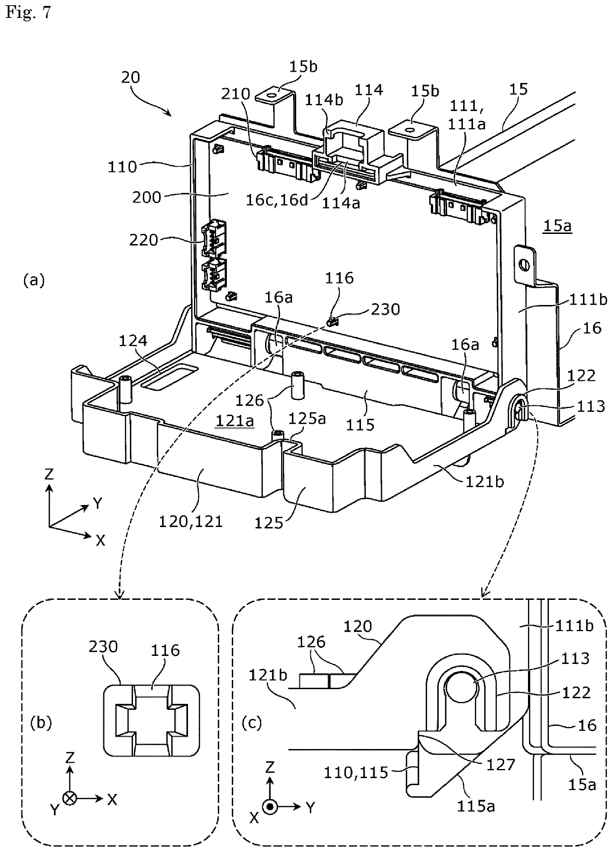

Fig. 7 is a perspective view, a front view, and a side view illustrating the configuration in the state where the cover 120 is opened in the substrate unit 20 of the embodiment. Specifically, a part (a) of Fig. 7 is a perspective view illustrating the configuration in the state where the cover 120 is rotated with respect to the substrate holder 110 in the substrate unit 20 in Fig. 5. Apart (b) of Fig. 7 is a partial front view illustrating a configuration in the state where a through-hole 230 of the substrate 200 and a fixing unit 116 of the substrate holder 110 are viewed from the Y-axis negative direction. Apart (c) of Fig. 7 is a partial side view illustrating an attaching configuration of the substrate holder 110 and the cover 120, and is a view corresponding to the part (c) of Fig. 5.

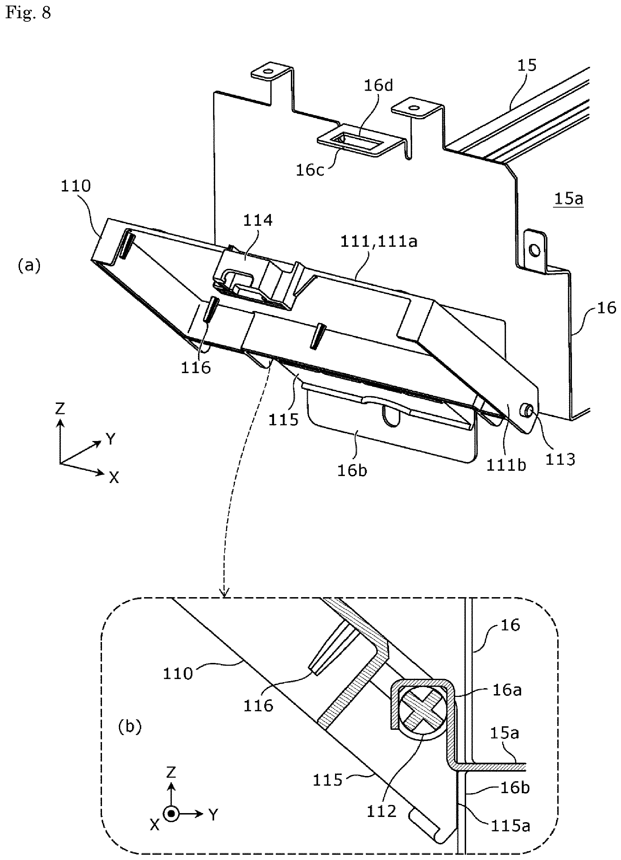

Fig. 8 is a perspective view and a sectional view illustrating a configuration in the state where the substrate holder 110 is rotated with respect to the substrate unit attaching unit 16 of the outer case support 15 of the embodiment. Specifically, a part (a) of Fig. 8 is a perspective view illustrating a configuration in the state where the substrate holder 110 is rotated until the substrate holder 110 can be rotated with respect to the substrate unit attaching unit 16 (until the rotation of the substrate holder 110 is regulated). Apart (b) of Fig. 8 is a sectional view illustrating the attaching configuration of the substrate unit attaching unit 16 and the substrate holder 110, and is a view corresponding to the part (b) of Fig. 5.

As illustrated in these drawings, the substrate unit 20 includes the substrate accommodating unit 100 and the substrate 200 accommodated in the substrate accommodating unit 100. That is, the substrate accommodating unit 100 accommodates and fixes the substrate 200 at a predetermined position, and protects the substrate 200 from the impact or the like. The substrate accommodating unit 100 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), an ABS resin, or a composite material thereof or an insulation-coated metal. This enables the substrate accommodating unit 100 to prevent the substrate 200 from contacting with a metal member of the outside and the like. The substrate accommodating unit 100 may be formed of a conductive member such as metal as long as an electrical insulation property of the substrate 200 is maintained.

The substrate accommodating unit 100 is rotatably attached to the side surface (the substrate unit attaching unit 16 of the outer case support 15) of the outer case 18 of the energy storage unit 10 in the horizontal direction (specifically, the Y-axis negative direction (first direction) in the erected posture. The substrate accommodating unit 100 includes the substrate holder 110 holding the substrate 200 and the cover 120 attached to the substrate holder 110. That is, the substrate 200 and the substrate accommodating unit 100 (the substrate holder 110 and the cover 120) are disposed in the Y-axis negative direction (first direction) of the energy storage unit 10 in the erected posture. Configurations of the substrate 200, and the substrate holder 110 and the cover 120 that are included in the substrate accommodating unit 100 will be described in detail below.

### [2.1 Description of substrate 200]

The substrate 200 is a circuit substrate (monitoring substrate) electrically connected to the energy storage unit 10. Specifically, the substrate 200 is electrically connected to the energy storage device 11 through the cable 13a and the connector 13b to acquire information such as the voltage and the temperature of the energy storage device 11 and monitor states such as a charge state and a discharge state of the energy storage device 11. The substrate 200 also has a function as a control substrate that discharges the energy storage devices 11 using the cables 13a to balance voltages between the energy storage devices 11. On the substrate 200, components (not illustrated) are attached to both the plate surface in the Y-axis positive direction and the plate surface in the Y-axis negative direction. The substrate 200 may monitor only the state of the energy storage device 11 without controlling the energy storage device 11.

More specifically, the substrate 200 includes connectors 210 and 220 and the through-hole 230. The connectors 210 and 220 are disposed at the end different from the end in the Z-axis negative direction (the end close to an axis on which the cover 120 described later rotates with respect to the substrate holder 110) of the outer peripheral portion of the substrate 200. In the embodiment, two connectors 210 are arranged side by side in the X-axis direction on both sides in the X-axis direction at the end in the Z-axis positive direction of the substrate 200, and two connectors 220 are arranged side by side in the Z-axis direction on both sides in the Z-axis direction at the end in the X-axis negative direction of the substrate 200.

The connector 210 is disposed on the plate surface in the Y-axis negative direction of the substrate 200 while an insertion port is directed in the Z-axis positive direction (the direction parallel to the plate surface of the substrate 200), and the connector 13b is configured to be detachably attachable to the insertion port (see the part (a) of Fig. 7). The connector 220 is disposed on the plate surface in the Y-axis negative direction of the substrate 200 while the insertion port is directed in the Y-axis negative direction, and an external connector (not illustrated) is configured to be detachably attachable to the insertion port through an opening 124 of the cover 120 (see the part (a) of Fig. 5 and the part (a) of Fig. 7). The opening 124 is a rectangular through-hole made at a position corresponding to the connector 220 in the Z-axis negative direction at the end in the X-axis negative direction of the cover 120.

The through-hole 230 is a rectangular through-hole penetrating the substrate 200 in the Y-axis direction. In the embodiment, a plurality of (six) through-holes 230 are disposed in an outer peripheral portion of the substrate 200. That is, three through-holes 230 are arranged side by side in the X-axis direction at the end in the Z-axis positive direction of the substrate 200, and three through-holes 230 are arranged side by side in the X-axis direction at the end in the Z-axis negative direction of substrate 200. Specifically, as illustrated in the part (b) of Fig. 7, the through-hole 230 is made such that a length in the X-axis direction is longer than that in the Z-axis direction, and the fixing unit 116 of the substrate holder 110 is inserted (press-fitted). A configuration in which the fixing unit 116 is inserted (press-fitted) into the through-hole 230 will be described in detail later.

### [2.2 Description of substrate holder 110 and cover 120]

The substrate holder 110 is a member that is disposed between the energy storage unit 10 and the substrate 200 and holds the substrate 200. As described above, the substrate holder 110 is rotatably attached to the substrate unit attaching unit 16 of the outer case support 15 of the energy storage unit 10 in the erected posture. The substrate holder 110 includes a holder body 111, a gripping unit 115 having a first substrate attaching unit 112, a first holder attaching unit 113, an upper-side attaching unit 114, and the fixing unit 116.

The cover 120 is a member that is disposed in the Y-axis negative direction (first direction) of the substrate 200 to close the opening of the substrate holder 110, and openably attached to the substrate holder 110. Specifically, the cover 120 is rotatably attached to the substrate holder 110. In addition to the opening 124 described above, the cover 120 includes a cover body 121, a first cover attaching unit 122, a second cover attaching unit 123, a cable disposing unit 125, and a substrate regulating unit 126 (see Figs. 6, Fig. 7, and the like).

### [2.2.1 Description of holder body 111 and cover body 121]

The holder body 111 is a member constituting the body of the substrate holder 110, and includes a first holder wall 111a and a second holder wall 111b. The first holder wall 111a is a flat plate-like and rectangular member that is disposed between the substrate unit attaching unit 16 and the substrate 200 and in parallel to an XZ-plane. The second holder wall 111b is a flat plate-shaped and rectangular portion that protrudes in the Y-axis negative direction from an outer peripheral edge of the first holder wall 111a and surrounds the periphery of the substrate 200. In the embodiment, the second holder wall 111b is disposed so as to surround both sides in the X-axis direction of the substrate 200, a part in the Z-axis negative direction, and a part in the Z-axis positive direction.

The cover body 121 is a member constituting the body of the cover 120, and includes the first cover wall 121a and the second cover wall 121b. The first cover wall 121a is a flat plate-like rectangular member parallel to the XZ-plane, and is disposed at the position where the substrate 200 is sandwiched between the first cover wall 121a and the first holder wall 111a of the holder body 111. The second cover wall 121b is a flat plate-shaped and substantially rectangular member that protrudes in the Y-axis positive direction from the outer peripheral edge of the first cover wall 121a and surrounds the periphery of the substrate 200 and the periphery of the second holder wall 111b. In the embodiment, the second cover wall 121b is disposed so as to surround both sides in the X-axis direction and the Z-axis positive direction of the substrate 200 and the second holder wall 111b.

### [2.2.2 Description of first substrate attaching unit 112]

The first substrate attaching unit 112 is a member that is disposed near the bottom 15a of the energy storage apparatus 1 (in the Z-axis negative direction) in the substrate holder 110 and is rotatably attached to the energy storage unit 10. The first substrate attaching unit 112 is disposed at the position closer to the bottom 15a of the energy storage apparatus 1 than the center position (the center position in the Z-axis direction) of the substrate holder 110. Specifically, two first substrate attaching units 112 are disposed in the Z-axis negative direction of the substrate holder 110 and at both ends in the X-axis direction. The substrate unit attaching unit 16 of the energy storage unit 10 includes a first energy storage attaching unit 16a to which the first substrate attaching unit 112 is attached. That is, two first energy storage attaching units 16a are disposed at positions corresponding to two first substrate attaching units 112 in the Z-axis negative direction of the substrate unit attaching unit 16 and at both ends in the X-axis direction.

Specifically, as illustrated in the parts (a) and (b) of Fig. 5, the first substrate attaching unit 112 is a columnar shaft body extending in the X-axis direction and having a circular or cross (+ shape, X-shape) sectional shape when cutting along the YZ-plane. The first energy storage attaching unit 16a is a member that extends in the Z-axis positive direction from the end in the Y-axis negative direction of the bottom 15a of the outer case support 15, is bent in the Y-axis negative direction, and is bent in the Z-axis negative direction. That is, the first energy storage attaching unit 16a has a shape in which the surface in the Z-axis positive direction protrudes in the Z-axis positive direction and the surface in the Z-axis negative direction is recessed in the Z-axis positive direction. In other words, the first energy storage attaching unit 16a has an inverted U shape when viewed from the X axis direction, the member in the Z-axis negative direction of the first energy storage attaching unit 16a being opened and recessed in the Z-axis positive direction.

The first substrate attaching unit 112 is inserted and disposed in the recessed portion of the first energy storage attaching unit 16a. In other words, the first energy storage attaching unit 16a is disposed on both sides in the Y-axis direction of the first substrate attaching unit 112 and the Z-axis positive direction so as to surround both sides in the Y-axis direction of the first substrate attaching unit 112 and the Z-axis positive direction. Thus, the first substrate attaching unit 112 is disposed at the position (in the Z-axis negative direction) closer to the bottom 15a of the energy storage apparatus 1 than the first energy storage attaching unit 16a.

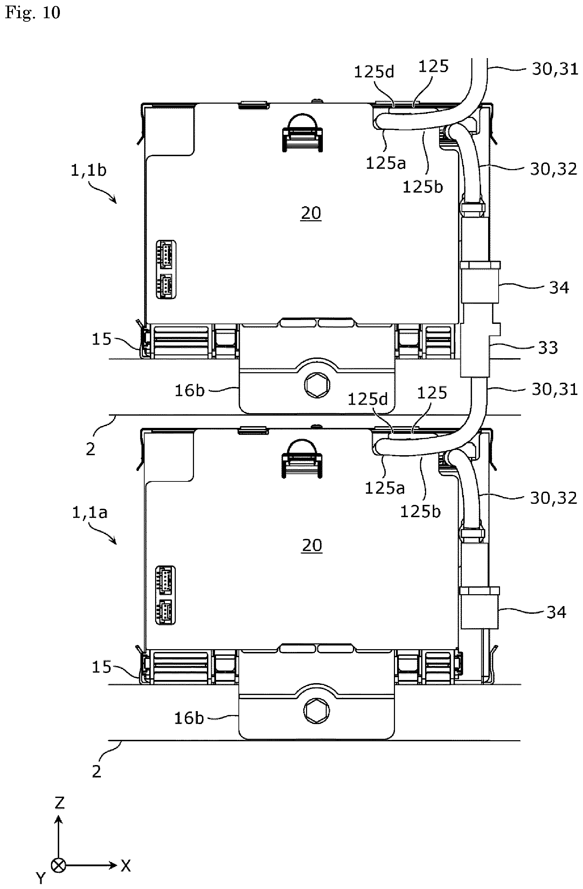

As illustrated in Fig. 8, the first substrate attaching unit 112 is configured to be rotatable with respect to the first energy storage attaching unit 16a. That is, when the first substrate attaching unit 112 rotates with respect to the first energy storage attaching unit 16a, the substrate holder 110 rotates with respect to the substrate unit attaching unit 16 about the first substrate attaching unit 112. An inclined surface 115a of the gripping unit 115 described later abuts on a wall 16b provided in the lower portion of the substrate unit attaching unit 16, whereby the rotation of the substrate holder 110 with respect to the substrate unit attaching unit 16 is regulated while the substrate holder 110 is inclined with respect to the substrate unit attaching unit 16. The wall 16b is a flat plate-like and rectangular member extending in the Z-axis negative direction from between the two first energy storage attaching units 16a at the end in the Y-axis negative direction of the bottom 15a of the outer case support 15. The wall 16b is used for attaching the energy storage apparatus 1 on a shelf board 2 (see Fig. 10) or the like of a rack (a member that accommodates the plurality of energy storage apparatuses 1).

Thus, the rotation of the substrate holder 110 is regulated while the substrate holder 110 is rotated by about 45° with respect to the substrate unit attaching unit 16, and in this state, the substrate holder 110 can be removed from the substrate unit attaching unit 16. Specifically, while the substrate holder 110 is rotated with respect to the substrate unit attaching unit 16, a second substrate attaching unit 114a of the upper-side attaching unit 114 described later is removed from a second energy storage attaching unit 16c of the substrate unit attaching unit 16 described later. The substrate holder 110 is moved in the Z-axis negative direction after rotating the substrate holder 110 about 45° with respect to the substrate unit attaching unit 16, so that the substrate holder 110 can be removed from the substrate unit attaching unit 16.

When the substrate holder 110 is attached to the substrate unit attaching unit 16, the first substrate attaching unit 112 is inserted in and attached to the first energy storage attaching unit 16a from the Z-axis negative direction while the substrate holder 110 is inclined at about 45° with respect to the substrate unit attaching unit 16. The substrate holder 110 is rotated so as to approach the substrate unit attaching unit 16, and the second substrate attaching unit 114a of the upper-side attaching unit 114 is attached to the second energy storage attaching unit 16c of the substrate unit attaching unit 16. In this way, the attachment and detachment of the substrate holder 110 to and from the energy storage unit 10 (the attachment and detachment of the substrate unit 20) can be performed. An angle at which the substrate holder 110 is regulated with respect to the substrate unit attaching unit 16 is not limited to 45°, but may be any angle as long as the substrate holder 110 can be detachably attached to the substrate unit attaching unit 16.

### [2.2.3 Description of first holder attaching unit 113 and first cover attaching unit 122]

The first holder attaching unit 113 is a member that is disposed near the bottom 15a of the energy storage apparatus 1 (in the Z-axis negative direction) in the substrate holder 110 and to which the cover 120 is attached. The first holder attaching unit 113 is disposed at the position closer to the bottom 15a of the energy storage apparatus 1 than the center position (the center position in the Z-axis direction) of the substrate holder 110. Specifically, two first holder attaching units 113 are disposed in the Z-axis negative direction of the substrate holder 110 and outside the first substrate attaching units 112 at both ends in the X-axis direction. The first cover attaching unit 122 of the cover 120 is attached to the first holder attaching unit 113.

The first cover attaching unit 122 is a member that is disposed near the bottom 15a of the energy storage apparatus 1 in the cover 120 (in the Z-axis negative direction) and rotatably attached to the substrate holder 110. The first cover attaching unit 122 is disposed at the position closer to the bottom 15a of the energy storage apparatus 1 than the center position (the center position in the Z-axis direction) of the cover 120. Specifically, the two first cover attaching units 122 are disposed at positions corresponding to the two first holder attaching units 113 in the Z-axis negative direction of the cover 120 and at both ends in the X-axis direction. That is, the first cover attaching unit 122 is disposed at the end in the Z-axis negative direction of the side wall on both sides in the X-axis direction of the second cover wall 121b.

Specifically, as illustrated in the parts (a) and (c) of Fig. 5 and the like, the first holder attaching unit 113 is a columnar shaft body having a circular shape as viewed in the X-axis direction and extending in the X-axis direction. The first cover attaching unit 122 has an inverted C-shape when viewed from the X-axis direction, a member in the Y-axis negative direction of the first cover attaching unit 122 being opened and recessed in the Y-axis positive direction. The first holder attaching unit 113 is inserted and disposed in the recessed portion of the first cover attaching unit 122. In other words, the first cover attaching unit 122 is disposed on both sides in the Z-axis direction of the first holder attaching unit 113 and the Y-axis positive direction so as to surround both sides in the Z-axis direction of the first holder attaching unit 113 and in the Y-axis positive direction. Thus, the first cover attaching unit 122 is disposed in the direction (Y-axis positive direction) from the cover 120 toward the substrate holder 110 with respect to the first holder attaching unit 113.

As illustrated in the parts (a) and (c) of Fig. 7, the first cover attaching unit 122 is configured to be rotatable with respect to the first holder attaching unit 113. That is, when the first cover attaching unit 122 rotates with respect to the first holder attaching unit 113, the cover 120 rotates with respect to the substrate holder 110 about the first holder attaching unit 113. A rotation regulating unit 127 (see the part (c) of Fig. 7) provided near the first cover attaching unit 122 abuts on the substrate holder 110, whereby the rotation of the cover 120 with respect to the substrate holder 110 is regulated. That is, the rotation regulating unit 127 is a planar member disposed on the lower end surface of the first cover wall 121a of the cover body 121, and restricts the rotation of the cover 120 with respect to the substrate holder 110 by abutting on the surface in the Y-axis negative direction of the lower portion (the gripping unit 115 and the like) of the substrate holder 110.

Thus, in the embodiment, the rotation of the cover 120 is regulated while the cover 120 is rotated by 90° with respect to the substrate holder 110, and in this state, the substrate 200 can be detachably attached to the substrate holder 110. Specifically, the second cover attaching unit 123 described later is removed from a second holder attaching unit 114b of the upper-side attaching unit 114 while the cover 120 is rotated with respect to the substrate holder 110. After the cover 120 is rotated by about 90° with respect to the substrate holder 110, the substrate 200 can be detachably attached to the substrate holder 110. Thus, the substrate 200 can be detachably attached to the substrate holder 110 without detaching the cover 120 from the substrate holder 110.

In this state, the cover 120 can be removed from the substrate holder 110 by moving the cover 120 in the Z-axis positive direction. When the cover 120 is removed from the substrate holder 110, the first holder attaching unit 113 is inserted into the first cover attaching unit 122 from the Z-axis negative direction while the cover 120 is orthogonal to the substrate holder 110, so that the cover 120 can be attached to the substrate holder 110. When the cover 120 is rotated so as to approach the substrate holder 110, the second cover attaching unit 123 can be attached to the second holder attaching unit 114b. In this way, the cover 120 can also be detachably attached to the substrate holder 110. The angle at which the cover 120 is regulated with respect to the substrate holder 110 is not limited to 90°, but may be any angle such as 90°±10° as long as the cover 120 can be detachably attached to the substrate holder 110. The substrate 200 is easily replaced when the angle is larger than 90°, and the fall of the substrate 200 can be prevented when the angle is smaller than 90°.

### [2.2.4 Description of upper-side attaching unit 114 and second cover attaching unit 123]

The upper-side attaching unit 114 is a member that is disposed at a central portion in the X-axis direction of the Z-axis positive direction (the direction opposite to the bottom 15a) in the substrate holder 110 and is engageably attached to the energy storage unit 10 and the cover 120. The upper-side attaching unit 114 is disposed at the position farther from the bottom 15a of the energy storage apparatus 1 than the center position (the center position in the Z-axis direction) of the substrate holder 110. Specifically, the upper-side attaching unit 114 includes the second substrate attaching unit 114a that is attached to the energy storage unit 10 by engaging with the energy storage unit 10 and the second holder attaching unit 114b that is attached to the cover 120 by engaging with the cover 120.

As illustrated in Fig. 6 and the like, the second substrate attaching unit 114a is a protrusion that is disposed in the Z-axis negative direction of the upper-side attaching unit 114 to protrude in the Z-axis negative direction. The substrate unit attaching unit 16 of the energy storage unit 10 includes the second energy storage attaching unit 16c to which the second substrate attaching unit 114a is attached at the position corresponding to the second substrate attaching unit 114a at the central portion in the X-axis direction of the Z-axis positive direction. A rectangular opening 16d is formed in the second energy storage attaching unit 16c. The second substrate attaching unit 114a is inserted into the opening 16d from the Z-axis positive direction, and engages with an end edge in the Y-axis negative direction of the opening 16d, thereby engaging with the second energy storage attaching unit 16c. Thus, the substrate holder 110 and the energy storage unit 10 engages with each other in the Z-axis positive direction.

The second holder attaching unit 114b is a protrusion that is disposed in the Z-axis positive direction of the upper-side attaching unit 114 and protrudes in the Z-axis negative direction, and the second cover attaching unit 123 of the cover 120 is attached to the second holder attaching unit 114b. The second cover attaching unit 123 is a member that is disposed at the central portion in the X-axis direction of the Z-axis positive direction (the direction opposite to the bottom 15a) of the cover 120, and includes a protrusion 123a protruding in the Z-axis positive direction. The second cover attaching unit 123 is disposed at the position farther from the bottom 15a of the energy storage apparatus 1 than the center position (the center position in the Z-axis direction) of the cover 120. The protrusion 123a is disposed in the Y-axis positive direction of the second holder attaching unit 114b and engages with the second holder attaching unit 114b in the Y-axis direction, whereby the cover 120 and the substrate holder 110 engage with each other in the Z-axis positive direction. In this way, the second cover attaching unit 123 is a member that is attached to the substrate holder 110 by engaging with the substrate holder 110.

### [2.2.5 Description of gripping unit 115]

The gripping unit 115 is a handle that is disposed at the central portion in the X-axis direction near the bottom 15a of the energy storage apparatus 1 (Z-axis negative direction) in the substrate holder 110 to grip the energy storage apparatus 1. The gripping unit 115 is disposed at the position closer to the bottom 15a of the energy storage apparatus 1 than the center position (the center position in the Z-axis direction) of the substrate holder 110. Specifically, the gripping unit 115 is a member that has the above-described first substrate attaching units 112 at both ends and is long in the X-axis direction. That is, as described above, at least a part (first substrate attaching unit 112) of the gripping unit 115 is disposed at the position closer to the bottom 15a of the energy storage apparatus 1 than at least a part (first energy storage attaching unit 16a) of the energy storage unit 10. In the embodiment, the gripping unit 115 is formed integrally with the substrate holder 110.

In this way, the gripping unit 115 functions as a handle in the Y-axis negative direction of the energy storage apparatus 1. In the Y-axis positive direction of the energy storage apparatus 1, the member in which the connection unit 15c of the outer case support 15 of the energy storage unit 10 and the connection unit 17c of the outer case lid 17 are connected to each other functions as the handle (second gripping unit) (see Fig. 2). The definition of the second gripping unit is not particularly limited, but not both the connection unit 15c and the connection unit 17c but only the connection unit 15c may be referred to as the second gripping unit, the connection unit 15c or the central portion in the X-axis direction of the connection unit 15c and the connection unit 17c may be referred to as the second gripping unit, or the other portion may be referred to as the second gripping unit. The second gripping unit is formed such that the sheet metal is folded downward and does not become an edge when gripped by the operator. The member in which the connection unit 15b of the outer case support 15 and the connection unit 17b of the outer case lid 17 are connected to each other is covered with the cover 120.

The gripping unit 115 includes the inclined surface 115a that is inclined in the direction (Y-axis negative direction) opposite to the energy storage unit 10 toward the bottom 15a of the energy storage apparatus 1 (toward the Z-axis negative direction) on the surface near the energy storage unit 10 (Y-axis positive direction). The inclined surface 115a is an inclined surface that is formed on the surface facing the energy storage unit 10 and inclined so as to be away from the energy storage unit 10 toward the bottom 15a of the energy storage apparatus 1. That is, the surface in the Y-axis negative direction of the gripping unit 115 is parallel to the XZ-plane, whereas the surface in the Y-axis positive direction of the gripping unit 115 is inclined from the XZ-plane. An inclination angle of the inclined surface 115a is not particularly limited, but is preferably inclined at an angle at which the fingers of the hand of the operator can be inserted (or are easily inserted) in the Y-axis positive direction of the gripping unit 115 such that gripping unit 115 can be gripped (or is easily gripped). In the embodiment, the inclined surface 115a is inclined at about 45° with respect to the vertical direction.

In the gripping unit 115, a gripping unit recess 115b recessed in the direction (Y-axis negative direction) opposite to the energy storage unit 10 is formed on the surface (the surface close to the energy storage unit 10, the surface in the Y-axis positive direction) facing the energy storage unit 10 (see Fig. 6). That is, the gripping unit recess 115b is a recess formed such that the inclined surface 115a of the gripping unit 115 is recessed in the Y-axis negative direction. In the embodiment, two gripping unit recesses 115b arranged in the X-axis direction are formed on the inclined surface 115a of the gripping unit 115. It can also be said that the inclined surface 115a is formed between the two gripping unit recesses 115b and on both sides in the X-axis direction of the two gripping unit recesses 115b. In other words, the wall is disposed between the two gripping unit recesses 115b and on both sides in the X-axis direction of the two gripping unit recesses 115b (the edge portion of the gripping unit 115), and the inclined surface 115a is formed on the wall. A size, a shape, and the number of gripping unit recesses 115b are not particularly limited, but are preferably a size, a shape, and the number of gripping unit recesses in which the fingers of the hand of the operator can be inserted (or are easily inserted) such that the gripping unit 115 can be gripped (or is easily gripped).

A distal end in the Z-axis negative direction of the gripping unit 115 protrudes toward the front (Y-axis negative direction), and the distal end has an R shape, so that the edge of the gripping unit 115 can be prevented from biting into the hand of the operator when the operator grips the gripping unit 115.

### [2.2.6 Description of fixing unit 116 and substrate regulating unit 126]

The fixing unit 116 is a member that fixes the substrate 200 in the posture in which the plate surface of the substrate 200 is directed in the direction intersecting the vertical direction (Z-axis direction). In the embodiment, the substrate 200 is fixed in the posture in which the plate surface of the substrate 200 is directed in the horizontal direction (Y-axis direction). Specifically, the fixing unit 116 is a protrusion that protrudes in the Y-axis negative direction from the opposing surface of the substrate 200 of the substrate holder 110 (the surface in the Y-axis negative direction of the first holder wall 111a of the holder body 111), and fixes the substrate 200 in the press-fitted state. The fixing unit 116 fixes the substrate 200 in a non-conductive state without being conductive to the substrate 200.

In the embodiment, a plurality of (six) fixing units 116 are disposed on the outer peripheral portion of the first holder wall 111a. That is, three fixing units 116 are arranged side by side in the X-axis direction at the end in the Z-axis positive direction of the first holder wall 111a, and three fixing units 116 are arranged side by side in the X-axis direction at the end in the Z-axis negative direction of the first holder wall 111a. That is, the fixing unit 116 is disposed at the position corresponding to the through-hole 230 made in the substrate 200.

Specifically, as illustrated in Fig. 6, the part (b) of Fig. 7, and the like, the fixing unit 116 is a protrusion that becomes thinner toward the tip portion, and fixes the substrate 200 while being inserted and press-fitted into the through-hole 230 of the substrate 200. That is, the fixing unit 116 has a tapered shape in which a width in the X-axis direction and the Z-axis direction decreases toward the Y-axis negative direction. The fixing unit 116 has a cross shape (+ shape) when viewed in the Y-axis direction, and abuts on the inner surface of the through-hole 230 in the Z-axis direction, is compressed, and is press-fitted into the through-hole 230. The fixing unit 116 is configured not to abut on the inner surface of the through-hole 230 in the X-axis direction so as to be insertable into the through-hole 230 even if the position of the fixing unit is shifted from the through-hole 230. The fixing unit 116 fixes the substrate 200 at the position separated from the opposing surface of the substrate 200 (the surface in the Y-axis negative direction of the first holder wall 111a). That is, a space is formed between the substrate 200 and the first holder wall 111a.

The sizes and shapes of the fixing unit 116 and the through-hole 230 are not particularly limited as long as the fixing unit 116 can be inserted into the through-hole 230 in the press-fitted state. The fixing unit 116 and the through-hole 230 may have a circular shape, an elliptical shape, an oval shape, a triangular shape, other polygonal shapes, or the like when viewed from the Y-axis direction, and the fixing unit 116 may abut on the inner surface of the through-hole 230 and be compressed also in the X-axis direction. The number and the arrangement positions of the fixing units 116 and the through-holes 230 are also not particularly limited.

The substrate regulating unit 126 of the cover 120 is disposed in the Y-axis negative direction of the substrate 200. The substrate regulating unit 126 is a protrusion that protrudes in the Y-axis positive direction from the surface in the Y-axis positive direction of the first cover wall 121a of the cover body 121, and regulates the movement of the substrate 200 in the direction toward the cover 120 (Y-axis negative direction). When the substrate 200 tries to move in the Y-axis negative direction, the tip of the substrate regulating unit 126 abuts on the substrate 200, so that the movement in the Y-axis negative direction of the substrate 200 is regulated. That is, because the fixing unit 116 regulates the movement in the Y-axis positive direction of the substrate 200, the movement of the substrate 200 toward both sides in the Y-axis direction is regulated by the fixing unit 116 and the substrate regulating unit 126.

In the embodiment, a plurality of (four) cylindrically-shaped substrate regulating units 126 are disposed on the outer peripheral portion of the first cover wall 121a. That is, the substrate regulating unit 126 is disposed at the outer peripheral portion of the substrate 200 and at the position not overlapping the fixing unit 116 when viewed in the Y-axis direction. The size, shape, number, arrangement position, and the like of the substrate regulating unit 126 are not limited to the above.

### [2.2.7 Description of cable disposing unit 125]

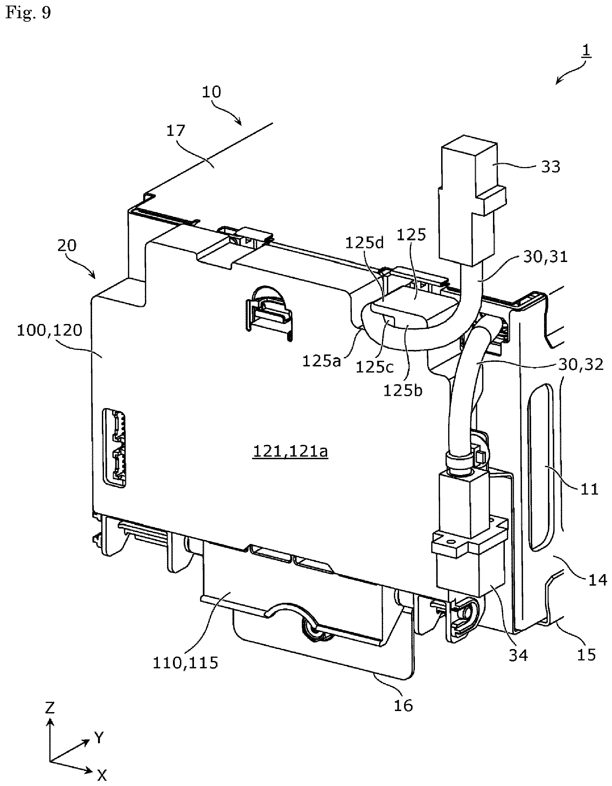

With reference to Figs. 9 and 10, the configuration of the cable disposing unit 125 of the cover 120 will be described below. Fig. 9 is a perspective view illustrating the configuration while the cable 30 is disposed in the cable disposing unit 125 of the substrate unit 20 of the embodiment. Specifically, Fig. 9 is the perspective view illustrating the end in the Y-axis negative direction of the energy storage apparatus 1 in Fig. 1. Fig. 10 is a front view illustrating a connection configuration of the cable 30 in the energy storage apparatus 1 of the embodiment. Specifically, Fig. 10 illustrates the configuration of the state in which two energy storage apparatuses 1 are arranged in the Z-axis direction to connect the cables 30 is viewed from the Y-axis negative direction.

The cable disposing unit 125 is a member that is disposed at the end in the X-axis positive direction of the direction (Z-axis positive direction) opposite to the bottom 15a of the energy storage apparatus 1 in the cover 120 and in which the positive electrode power supply cable 31 of the cable 30 is disposed. As illustrated in Figs. 4, 5, 9, and the like, the cable disposing unit 125 includes a first recess 125a, an opening and closing regulating unit 125b, an inclined unit 125c, and a cable regulating unit 125d.

The first recess 125a is a recess in which the end in the X-axis positive direction in the upper surface of the wall (also referred to as a third cover wall) in the Z-axis positive direction of the cover 120 is recessed in the Z-axis negative direction (the second direction intersecting the first direction). It can also be said that the first recess 125a is a recess in which the front surface (the surface in the Y-axis negative direction) of the first cover wall 121a is recessed. Specifically, the first recess 125a is a recess that is formed so as to penetrate the cover 120 in the Y-axis direction and extends in the Y-axis direction, and the positive electrode power supply cable 31 is disposed in the first recess 125a.

The opening and closing regulating unit 125b is a flat plate-shaped rectangular wall that is disposed in the X-axis positive direction of the first recess 125a and is parallel to the XZ-plane. That is, the opening and closing regulating unit 125b is a member extending in the Z-axis positive direction from the end in the Z-axis positive direction of the first cover wall 121a and the X-axis positive direction of the first cover wall 121a, or a part of the end in the Z-axis positive direction of the first cover wall 121a and the X-axis positive direction of the first cover wall 121a. The opening and closing regulating unit 125b regulates the opening and closing of the cover 120 with respect to the substrate holder 110 by disposing the positive electrode power supply cable 31 in the Y-axis negative direction. Specifically, the opening and closing regulating unit 125b regulates the rotation of the cover 120 with respect to the substrate holder 110. In this case, the opening and closing regulating unit 125b also regulates the rotation of the substrate holder 110 with respect to the substrate unit attaching unit 16.

The inclined unit 125c is a flat and rectangular wall that is disposed between the first recess 125a and the opening and closing regulating unit 125b and inclined with respect to the opening and closing regulating unit 125b. Specifically, the inclined unit 125c is disposed so as to be inclined toward the Y-axis negative direction near the X-axis positive direction. When the positive electrode power supply cable 31 disposed in the first recess 125a is disposed in the Y-axis negative direction of the opening and closing regulating unit 125b, the positive electrode power supply cable 31 is also disposed in the Y-axis negative direction of the inclined unit 125c.

The cable regulating unit 125d is a flat plate-shaped, rectangular wall parallel to the XY-plane, the wall being disposed between the first recess 125a and the opening and closing regulating unit 125b and in the Z-axis positive direction of the inclined unit 125c. That is, the cable regulating unit 125d is disposed so as to protrude in the X-axis negative direction and the Y-axis negative direction. When the positive electrode power supply cable 31 disposed in the first recess 125a is disposed in the Y-axis negative direction of the opening and closing regulating unit 125b, the positive electrode power supply cable 31 is disposed in the Z-axis negative direction of the cable regulating unit 125d. Thus, the cable regulating unit 125d regulates the movement of the positive electrode power supply cable 31 in the Z-axis positive direction (the second direction intersecting the first direction).

In the configuration as described above, as illustrated in Fig. 10, the plurality of energy storage apparatuses 1 are attached to the shelf board 2 of the rack, and the positive electrode power supply cable 31 of one energy storage apparatus 1 (for example, an energy storage apparatus 1a) is connected to the negative electrode power supply cable 32 of another energy storage apparatus 1 (for example, an energy storage apparatus 1b). Specifically, in the two energy storage apparatuses 1a and 1b arranged in the Z-axis direction, a connector 33 connected to the positive electrode power supply cable 31 of the energy storage apparatus 1a is connected to a connector 34 connected to the negative electrode power supply cable 32 of the energy storage apparatus 1b.

In this case, the length and the like of the positive electrode power supply cable 31 of the energy storage apparatus 1a are adjusted such that the positive electrode power supply cable 31 cannot be connected to the negative electrode power supply cable 32 of the energy storage apparatus 1b unless the positive electrode power supply cable 31 passes through the Y-axis negative direction of the opening and closing regulating unit 125b. That is, one end of the positive electrode power supply cable 31 is electrically connected to the energy storage unit 10 of one energy storage apparatus 1, and the other end is connected to an external conductive member (the negative electrode power supply cable 32 of another energy storage apparatus 1). The opening and closing regulating unit 125b is disposed in the Y-axis positive direction of the positive electrode power supply cable 31 while the positive electrode power supply cable 31 is connected to the external conductive member.

As described above, the cover 120 is configured such that at least a part (opening and closing regulating unit 125b) of the cover 120 is disposed in the Y-axis positive direction (the direction opposite to the first direction) of the positive electrode power supply cable 31 while the positive electrode power supply cable 31 is connected to the external conductive member. That is, the positive electrode power supply cable 31 protrudes from the energy storage unit 10, extends in the Y-axis negative direction (first direction), and is disposed in the first recess 125a. The positive electrode power supply cable 31 is disposed in the Y-axis negative direction (first direction) of at least a part (the inclined unit 125c and the opening and closing regulating unit 125b) of the cover 120, and is connected to the external conductive member. As a result, the opening and closing (rotation) of the cover 120 with respect to the substrate holder 110 is regulated, and the movement of the positive electrode power supply cable 31 in the Z-axis positive direction is also regulated by the cable regulating unit 125d.

### [3 Description of effects]

As described above, the energy storage apparatus 1 of the embodiment of the present invention includes the energy storage unit 10 including the energy storage devices 11 and the substrate unit 20 that includes the substrate 200 and the substrate accommodating unit 100 and is attached to the energy storage unit 10. The substrate accommodating unit 100 of the substrate unit 20 includes the gripping unit 115 to grip the energy storage apparatus 1. As described above, when the gripping unit 115 is provided in the substrate accommodating unit 100 of the substrate unit 20, there is no possibility that the substrate unit 20 becomes an obstacle and the energy storage apparatus 1 cannot be gripped or no possibility that a complicated structure is formed so as to grip the energy storage apparatus 1 while avoiding the substrate unit 20. Thus, the energy storage apparatus 1 can be easily gripped using the gripping unit 115, so that the energy storage apparatus 1 can be easily moved (lifting, pulling out, and the like). As illustrated in Fig. 10, the work of lifting the energy storage apparatus 1 in order to carry the energy storage apparatus 1 to the shelf board 2 of the rack, and the work of pushing or pulling out the energy storage apparatus 1 after the energy storage apparatus 1 is placed on the shelf board 2 can be easily performed.

In the energy storage apparatus 1, when the gripping unit can be formed on the outer case support 15 by sheet metal working, the gripping unit can be easily formed. However, the wall 16b is provided in the outer case support 15 in order to attach the energy storage apparatus 1 to the shelf board 2 of the rack or the like. For this reason, the gripping unit cannot be easily provided on the outer case support 15, and the gripping unit of another member or the like is required to be attached. Thus, by providing the gripping unit 115 in the substrate accommodating unit 100 of the substrate unit 20, the number of components does not increase, and the gripping unit 115 can be easily configured.

In the substrate unit 20, the substrate 200 is fixed to the substrate holder 110 by press fitting. Thus, even when the substrate unit 20 is slightly deformed by gripping the gripping unit 115, the substrate 200 can move with respect to the substrate holder 110, so that damage such as deformation of the substrate 200 can be prevented.

The substrate unit 20 is attached to the end in the longitudinal direction (Y-axis direction) of the energy storage unit 10, so that the gripping unit 115 is also attached to the end in the longitudinal direction of the energy storage unit 10. Thus, the energy storage apparatus 1 that is a heavy load can be gripped in the longitudinal direction, so that the energy storage apparatus 1 can be stably gripped and easily moved.

At least a part (first substrate attaching unit 112) of the gripping unit 115 of the substrate unit 20 is disposed at the position closer to the bottom 15a of the energy storage apparatus 1 than at least a part (first energy storage attaching unit 16a) of the energy storage unit 10. Thus, when the energy storage apparatus 1 is lifted with the gripping unit 115 held, the movement of the gripping unit 115 with respect to the energy storage unit 10 is regulated. When the movement of the gripping unit 115 with respect to the energy storage unit 10 is regulated, the detachment of the substrate unit 20 from the energy storage unit 10 is prevented. As described above, when the energy storage apparatus 1 is moved with the gripping unit 115 held, the substrate unit 20 can be prevented from being detached from the energy storage unit 10, so that the energy storage apparatus 1 can be easily moved.

Because the substrate unit 20 is connected to the energy storage unit 10 at the position close to the bottom 15a, a fulcrum of acting force is located at the position close to the bottom 15a of the substrate unit 20, namely, at the position away from the substrate 200 when the gripping unit 115 is gripped to move the energy storage apparatus 1. In this case, a force point is set to the position in the Z-axis negative direction (downward) with respect to the fulcrum, so that an action point becomes the position in the Z-axis positive direction (upward) with respect to the fulcrum. The position of the first substrate attaching unit 112 (the position of the first energy storage attaching unit 16a) is the fulcrum, and the position of the antinode of the fingertip inserted into the gripping unit recess 115b by the operator is the force point.

It is assumed that the energy storage apparatus 1 is moved by being pulled toward the front side (Y-axis negative direction) by replacement of the energy storage apparatus 1 or the like. In this case, the operator moves the energy storage apparatus 1 by inserting the finger into the gripping unit recess 115b of the gripping unit 115 of the substrate unit 20 and pulling the finger toward the front side. At this point, when the position (force point) of the finger is disposed in the Z-axis negative direction with respect to the position (fulcrum) of the first substrate attaching unit 112, the upper side of the substrate unit 20 becomes the action point, and the action is made in the direction (Y-axis positive direction) in which the energy storage unit 10 is pushed. When the position (force point) of the finger is located above the position (fulcrum) of the first substrate attaching unit 112, the substrate unit 20 turns to come off from the energy storage unit 10 as illustrated in Fig. 8. On the other hand, when the position (force point) of the finger is located below the position (fulcrum) of the first substrate attaching unit 112, the substrate unit 20 presses the energy storage unit 10, so that the substrate unit 20 is prevented from coming off from the energy storage unit 10.

In order to dispose the position (force point) of the finger below the position (fulcrum) of the first substrate attaching unit 112, the gripping unit recess 115b is preferably recessed only to a relatively low position in the Z-axis direction. In the embodiment, the gripping unit recess 115b is recessed to the position slightly higher than the first substrate attaching unit 112, but may be recessed only to the same height as the position of the first substrate attaching unit 112 or to the position lower than the position of the first substrate attaching unit 112.

Because the gripping unit recess 115b is formed on the surface of the gripping unit 115 of the substrate unit 20 facing the energy storage unit 10, the finger of the hand of the operator or the like can be easily inserted between the gripping unit 115 and the energy storage unit 10, so that the gripping unit 115 can be easily gripped. Thus, the energy storage apparatus 1 can be easily gripped, so that the energy storage apparatus 1 can be easily moved.

Because the inclined surface 115a is formed on the surface facing the energy storage unit 10 of the gripping unit 115 of the substrate unit 20, the finger of the hand of the operator or the like can be easily inserted between the gripping unit 115 and the energy storage unit 10, so that the gripping unit 115 can be easily gripped. Thus, the energy storage apparatus 1 can be easily gripped, so that the energy storage apparatus 1 can be easily moved.

The energy storage apparatus 1 includes the energy storage unit 10 including the energy storage devices 11 and the substrate unit 20 that includes the substrate 200 and the substrate accommodating unit 100 and is attached to the energy storage unit 10. In the substrate accommodating unit 100, the cover 120 includes the first cover attaching unit 122 rotatably attached to the substrate holder 110. As described above, because the cover 120 is rotatably attached to the substrate holder 110, the cover 120 can be easily rotated with respect to the substrate holder 110, so that the cover 120 can be easily opened and closed with respect to the substrate 200. Thus, the substrate 200 can be easily accessed, so that the work such as maintenance of the substrate 200 (installation, repair, replacement, or the like of the substrate 200) can be easily performed. This is extremely effective in assembling work, maintenance work, and the like when the number of energy storage apparatuses 1 is large. The same applies to the following. When the cover 120 is configured to rotate with respect to the substrate holder 110, there is no need to detach the cover 120 to secure a placement place.

When the first cover attaching unit 122 of the cover 120 is disposed at the position (upper side) far from the bottom 15a of the energy storage apparatus 1, the cover 120 is required to be lifted when the cover 120 is rotated with respect to the substrate holder 110, and sometimes the work such as the maintenance of the substrate 200 is hardly performed. For this reason, the first cover attaching unit 122 is disposed at the position (lower side) closer to the bottom 15a of the energy storage apparatus 1 than the center position of the cover 120. Thus, the first cover attaching unit 122 is rotated at the position close to the bottom 15a of the energy storage apparatus 1, so that the work such as the maintenance of the substrate 200 can be easily performed.

In the substrate accommodating unit 100, the first cover attaching unit 122 of the cover 120 is disposed in the direction from the cover 120 toward the substrate holder 110 with respect to the first holder attaching unit 113 of the substrate holder 110. Thus, even when the cover 120 is about to come off from the substrate holder 110, the movement of the first cover attaching unit 122 is regulated by the first holder attaching unit 113, so that the cover 120 can be prevented from coming off from the substrate holder 110. When the first cover attaching unit 122 is rotated by 90° with respect to the first holder attaching unit 113, the first cover attaching unit 122 is disposed above the first holder attaching unit 113, so that the cover 120 can be prevented from falling from the substrate holder 110.

The cover 120 of the substrate accommodating unit 100 includes the second cover attaching unit 123 that engages with the substrate holder 110 in addition to the first cover attaching unit 122. Thus, the cover 120 can be attached to the substrate holder 110 by both the first cover attaching unit 122 and the second cover attaching unit 123, so that the cover 120 can be more firmly attached to the substrate holder 110.

In the substrate accommodating unit 100, because the cover 120 includes the rotation regulating unit 127 that regulates the rotation with respect to the substrate holder 110, the rotation of the cover 120 with respect to the substrate holder 110 is regulated. Thus, the cover 120 can be prevented from being excessively rotated to come into contact with another member or to fall from the substrate holder 110, so that the work such as the maintenance of the substrate 200 can be easily performed. By regulating the rotation of the cover 120 in the horizontal state, the cover 120 can be used as a receptacle when a component is dropped.

The energy storage apparatus 1 includes the energy storage unit 10 that includes the energy storage devices 11 and the substrate unit 20 that includes the substrate 200 and the substrate holder 110 and is attached to the energy storage unit 10, and the substrate holder 110 includes the first substrate attaching unit 112 rotatably attached to the energy storage unit 10. As described above, the substrate holder 110 of the substrate unit 20 is rotatably attached to the energy storage unit 10, so that the substrate unit 20 can be easily rotated with respect to the energy storage unit 10. Thus, the substrate unit 20 can be easily moved or detachably attached with respect to the energy storage unit 10, so that the work on the substrate 200 can be easily performed. This is extremely effective in assembling work, maintenance work, and the like when the number of energy storage apparatuses 1 is large. The same applies to the following.

The substrate unit 20 is rotatably attached to the energy storage unit 10, so that the substrate unit 20 can be prevented from coming off from the energy storage unit 10 when the operator performs the work while gripping the gripping unit 115 of the substrate unit 20.

When the first substrate attaching unit 112 of the substrate holder 110 is disposed at the position (upper side) far from the bottom 15a of the energy storage apparatus 1, the work of lifting the substrate unit 20 is required in rotating the substrate unit 20 with respect to the energy storage unit 10. For this reason, the first substrate attaching unit 112 is disposed at the position (lower side) closer to the bottom 15a of the energy storage apparatus 1 than the center position of the substrate holder 110. Thus, because the first substrate attaching unit 112 is rotated at the position close to the bottom 15a of the energy storage apparatus 1, the substrate unit 20 can be easily moved or detachably attached with respect to the energy storage unit 10, and the work on the substrate 200 can be easily performed.

The first substrate attaching unit 112 is disposed at the position closer to the bottom 15a of the energy storage apparatus 1 than the first energy storage attaching unit 16a of the energy storage unit 10, so that the movement of the first substrate attaching unit 112 with respect to the energy storage unit 10 is regulated when the substrate unit 20 is gripped to lift the energy storage apparatus 1. Thus, the first substrate attaching unit 112 can be prevented from moving with respect to the energy storage unit 10, and the substrate unit 20 can be prevented from coming off from the energy storage unit 10. The first substrate attaching unit 112 is moved (pulled out) in the direction from the first energy storage attaching unit 16a toward the bottom 15a, so that the substrate unit 20 can be easily detached from the energy storage unit 10.

The substrate holder 110 includes the second substrate attaching unit 114a that engages with the energy storage unit 10 in addition to the first substrate attaching unit 112. Thus, the substrate unit 20 can be attached to the energy storage unit 10 by both the first substrate attaching unit 112 and the second substrate attaching unit 114a, so that the substrate unit 20 can be more firmly attached to the energy storage unit 10.

When the substrate unit 20 includes the cover 120 attached to the substrate holder 110, preferably the substrate 200 can be easily accessed in working on the substrate 200. For this reason, the first cover attaching unit 122 rotatably attached to the substrate holder 110 is provided in the cover 120. Thus, the substrate 200 can be easily accessed by rotating the cover 120 to be opened and closed with respect to the substrate holder 110, so that the work on the substrate 200 can be easily performed.

In the energy storage apparatus 1, the substrate holder 110 that holds the substrate 200 includes the fixing unit 116 that fixes the substrate 200 in the press-fitted state. As described above, the substrate 200 is fixed to the substrate holder 110 by the press-fitting, the work of attaching or detaching a screw is not required, so that the substrate 200 can be easily detachably attached to the substrate holder 110. The member such as the screw is not required by fixing the substrate 200 to the substrate holder 110 by the press-fitting, so that the number of components can be reduced.

The fixing unit 116 of the substrate holder 110 is a protrusion that becomes thinner toward the tip portion, and fixes the substrate 200 at the position separated from the opposing surface of the substrate holder 110 while being press-fitted into the through-hole 230 of the substrate 200. In this way, the tapered protrusion is provided on the substrate holder 110 and press-fitted into the through-hole 230 of the substrate 200, so that the substrate 200 can be easily detachably attached to the substrate holder 110 with a simple configuration. The substrate 200 is fixed at the position separated from the opposing surface of the substrate holder 110, so that the component can also be disposed on the back surface (the surface facing the opposing surface) of the substrate 200.

When the substrate 200 is fixed by screwing or the like while the plate surface of the substrate 200 faces the direction intersecting the vertical direction, the substrate 200 is hardly detachably attached to the substrate holder 110. For this reason, the substrate 200 is fixed to the substrate holder 110 with the fixing unit 116 by the press-fitting, so that the substrate 200 can be easily detachably attached to the substrate holder 110 with a simple configuration. This is extremely effective in assembling work, maintenance work, and the like when the number of energy storage apparatuses 1 is large.

Because the substrate 200 is fixed to the fixing unit 116 of the substrate holder 110 by not the screwing but the press-fitting, there is a risk that the substrate 200 comes off from the fixing unit 116. For this reason, the substrate regulating unit 126 that regulates the movement of the substrate 200 in the direction toward the cover 120 is provided in the cover 120 attached to the substrate holder 110. Thus, the substrate 200 fixed to the fixing unit 116 of the substrate holder 110 by the press-fitting can be prevented from coming off from the fixing unit 116.

The cover 120 is rotatably attached to the substrate holder 110, so that the cover 120 can be easily opened and closed with respect to the substrate holder 110 by rotating the cover 120 with respect to the substrate holder 110. Thus, even when the cover 120 is attached to the substrate holder 110, the substrate 200 can be easily detachably attached to the substrate holder 110.

The connectors 210 and 220 of the substrate 200 are disposed at the end different from the end close to the axis on which the cover 120 rotates with respect to the substrate holder 110. For this reason, when the cover 120 is rotated, the connectors 210 and 220 or the cables connected to the connectors 210 and 220 can be prevented from becoming an obstacle. Thus, the cover 120 can be easily rotated, for example, the cover 120 can be rotated while the cable is attached to the connectors 210 and 220, so that the substrate 200 can be easily detachably attached to the substrate holder 110.

Because the connector 210 is disposed at the end in the Z-axis positive direction of the substrate 200 and the insertion port faces the Z-axis positive direction (the direction parallel to the plate surface of the substrate 200), the connector 13b can be easily detachably attached, and the cable 13a is not disposed on the plate surface of the substrate 200. Thus, the substrate 200 can be easily detachably attached to the substrate holder 110.

At least a part of the cover 120 disposed in the Y-axis negative direction (first direction) of the substrate 200 is disposed in the Y-axis positive direction (the direction opposite to the first direction) of the positive electrode power supply cable 31 while the positive electrode power supply cable 31 is connected to the external conductive member. In this way, at least a part (opening and closing regulating unit 125b) of the cover 120 is disposed inside the positive electrode power supply cable 31 (in the Y-axis positive direction) while the cover 120 is disposed outside the substrate 200 and while the positive electrode power supply cable 31 is connected to the external conductive member (the negative electrode power supply cable 32 of the adjacent energy storage apparatus 1 or the like). Thus, when the cover 120 is opened, the positive electrode power supply cable 31 becomes an obstacle and the cover 120 cannot be opened. That is, the cover 120 cannot be opened unless the positive electrode power supply cable 31 is detached from an external conductive member (in the above embodiment, the connector 34 of the negative electrode power supply cable 32 of another energy storage apparatus 1) to move the positive electrode power supply cable 31, so that the work on the substrate 200 cannot be performed. Consequently, the positive electrode power supply cable 31 of the energy storage apparatus 1 and the external conductive member are disconnected from each other before the work on the substrate 200 is performed, so that the safety can be improved. That is, when a plurality of energy storage apparatuses 1 in which a plurality of energy storage devices 11 are connected in series are connected in series to constitute an energy storage facility, a total voltage of the energy storage facility becomes a high voltage of several hundred to several thousand volts. When the work such as the maintenance is performed under the high voltage, the power supply cable is reliably removed, so that the safety can be improved.

In the energy storage apparatus 1, the positive electrode power supply cable 31 protrudes from the energy storage unit 10 to extend in the Y-axis negative direction, so that the positive electrode power supply cable 31 crosses the cover 120 in the Y-axis negative direction, is disposed in the Y-axis negative direction of at least a part of the cover 120, and is connected to the external conductive member. In this way, the positive electrode power supply cable 31 is disposed so as to wind (hold) at least a part of the cover 120. Thus, the opening of the cover 120 can be prevented while the positive electrode power supply cable 31 is connected to the external conductive member, so that safety can be improved.

The positive electrode power supply cable 31 can be positioned with respect to the cover 120 by disposing the positive electrode power supply cable 31 in the first recess 125a recessed in the Z-axis negative direction (second direction) of the cover 120. For this reason, the positive electrode power supply cable 31 can be stably disposed in the Y-axis negative direction of at least a part of the cover 120. Thus, the opening of the cover 120 can be prevented while the positive electrode power supply cable 31 is connected to the external conductive member, so that safety can be improved.

The cover 120 regulates the movement of the positive electrode power supply cable 31 in the Z-axis positive direction (second direction) using the cable regulating unit 125d, so that the positive electrode power supply cable 31 can be prevented from moving from the Y-axis negative direction of the cover 120. Thus, the opening of the cover 120 can be prevented while the positive electrode power supply cable 31 is connected to the external conductive member, so that safety can be improved.

Because the cover 120 is rotatably attached to the substrate holder 110, the cover 120 is required to be rotated with respect to the substrate holder 110 in order to open the cover 120 to detach the substrate 200. When at least a part of the cover 120 is disposed in the Y-axis positive direction of the positive electrode power supply cable 31, the cover 120 cannot be rotated. Thus, the cover 120 cannot be opened unless the positive electrode power supply cable 31 is detached from the external conductive member to move the positive electrode power supply cable 31, so that the safety can be improved.

### [4 Description of Modification Example]

Although the energy storage apparatus 1 of the embodiment is described above, the present invention is not limited to the embodiment. That is, the embodiment disclosed herein is illustrative in all respects and is not restrictive, and the scope of the present invention includes all modifications within the meaning and scope equivalent to the claims.

In the above embodiment, the substrate unit 20 is attached to the end in the longitudinal direction (Y-axis direction) of the energy storage unit 10. The substrate unit 20 may be attached to the end in the X-axis direction or the Z-axis direction of the energy storage unit 10.

In the above-mentioned embodiment, the first holder attaching unit 113 of the substrate holder 110 and the first cover attaching unit 122 of the cover 120 are disposed at positions (Z-axis negative direction) close to the bottom 15a of the energy storage apparatus 1. The first holder attaching unit 113 and the first cover attaching unit 122 may be disposed at any position such as the central portion in the Z-axis positive direction or the Z-axis direction.

In the above embodiment, the first holder attaching unit 113 of the substrate holder 110 is the shaft body, and is disposed by being inserted from the open side of the first cover attaching unit 122 of the cover 120. The shapes of the first holder attaching unit 113 and the first cover attaching unit 122 are not particularly limited. A member in any direction of the first cover attaching unit 122 may be opened, or a through-hole having no opening may exist and the first holder attaching unit 113 may be inserted into the through-hole. Alternatively, the first holder attaching unit 113 and the first cover attaching unit 122 may have opposite configurations, namely, the first cover attaching unit 122 may be a shaft body and be inserted into the first holder attaching unit 113. The cover 120 may not be rotatably attached to the substrate holder 110.

In the above embodiment, the cover 120 includes the first cover attaching unit 122 and the second cover attaching unit 123 that are attached to the substrate holder 110. The cover 120 may not include the second cover attaching unit 123 or the first cover attaching unit 122. The same applies to the side of the substrate holder 110. The cover 120 may not include the rotation regulating unit 127.

In the above embodiment, the first substrate attaching unit 112 of the substrate holder 110 and the first energy storage attaching unit 16a of the energy storage unit 10 are disposed at positions (Z-axis negative direction) close to the bottom 15a of the energy storage apparatus 1. The first substrate attaching unit 112 and the first energy storage attaching unit 16a may be disposed at any position such as the Z-axis positive direction or the central portion in the Z-axis direction.

In the above embodiment, the first substrate attaching unit 112 of the substrate holder 110 is the shaft body, the member in the Z axis negative direction of the first energy storage attaching unit 16a of the energy storage unit 10 is opened, and the first substrate attaching unit 112 is disposed by being inserted into the first energy storage attaching unit 16a. Shapes of the first substrate attaching unit 112 and the first energy storage attaching unit 16a are not particularly limited. A member in any direction of the first energy storage attaching unit 16a may be opened, or a through-hole having no opening may exist and the first substrate attaching unit 112 may be inserted into the through-hole. Alternatively, the first substrate attaching unit 112 and the first energy storage attaching unit 16a may have opposite configurations, namely, the first energy storage attaching unit 16a may be a shaft body and be inserted into the first substrate attaching unit 112. The substrate holder 110 may not be rotatably attached to the energy storage unit 10.

In the above embodiment, the substrate holder 110 includes the first substrate attaching unit 112 and the second substrate attaching unit 114a that are attached to the energy storage unit 10. The substrate holder 110 may not have the second substrate attaching unit 114a, or not have the first substrate attaching unit 112. The same applies to the side of the energy storage unit 10.

In the above embodiment, the fixing unit 116 of the substrate holder 110 is the protrusion that becomes thinner toward the tip portion, and fixes the substrate 200 at the position separated from the opposing surface of the substrate holder 110. The fixing unit 116 may not have the tapered shape, but may be fixed while the substrate 200 abuts on the opposing surface of the substrate holder 110.

In the above embodiment, the substrate 200 is fixed in the posture in which the plate surface faces the direction intersecting the vertical direction. The substrate 200 may be fixed in the posture in which the plate surface faces the vertical direction (in the horizontal direction).

In the above embodiment, the cover 120 has the substrate regulating unit 126. As long as the substrate 200 can be firmly fixed by the fixing unit 116, the cover 120 may not include the substrate regulating unit 126. Alternatively, instead of the cover 120 including the substrate regulating unit 126, the substrate 200 may be fixed to the fixing unit 116 or the like using an adhesive or the like.

In the above embodiment, the connectors 210 and 220 of the substrate 200 are disposed at the end different from the end close to the axis on which the cover 120 rotates with respect to the substrate holder 110, but the connectors 210 and 220 may be disposed at the end close to the axis.

In the above embodiment, the substrate holder 110 includes the fixing unit 116 that fixes the substrate 200 in the press-fitted state. The substrate holder 110 may fix the substrate 200 not in the press-fitted state but by the screwing or the like.

In the above embodiment, the opening and closing regulating unit 125b of the cover 120 is disposed in the Y-axis positive direction of the positive electrode power supply cable 31 (the direction opposite to the first direction). The opening and closing regulating unit 125b may be disposed in the Y-axis positive direction of the cable such as the negative electrode power supply cable 32 or a communication cable other than the positive electrode power supply cable 31. Alternatively, the cover 120 may not include the cable regulating unit 125d, and not include the opening and closing regulating unit 125b.

In the above embodiment, the negative electrode power supply cable 32 of the adjacent energy storage apparatus 1 is exemplified as the external conductive member to which the positive electrode power supply cable 31 is connected. Examples of the external conductive member include the positive electrode power supply cable 31 of the adjacent energy storage apparatus 1, the negative electrode power supply cable 32 or the positive electrode power supply cable 31 of the non-adjacent energy storage apparatus 1, and the external control device that controls the plurality of energy storage apparatuses 1.

In the above embodiment, the substrate accommodating unit 100 includes the substrate holder 110 and the cover 120, but the substrate accommodating unit 100 may not include the cover 120. Alternatively, the substrate accommodating unit 100 may not include the substrate holder 110. In this case, the substrate 200 may be attached to the cover 120, and the gripping unit 115 may be provided in the cover 120. Even when the substrate accommodating unit 100 has the substrate holder 110, the substrate 200 may be attached to the cover 120, and the gripping unit 115 may be provided in the cover 120. That is, the gripping unit 115 may be provided in the substrate accommodating unit 100.

In the above embodiment, the inclined surface 115a and the gripping unit recess 115b are formed in the gripping unit 115 of the substrate unit 20. At least one of the inclined surface 115a and the gripping unit recess 115b may not be formed in the gripping unit 115.

A form constructed by any combination of the embodiment and the modification example is also included in the scope of the present invention.

The present invention can be implemented not only as the energy storage apparatus 1 but also as the substrate accommodating unit 100 including the gripping unit 115 or the substrate unit 20 including the substrate accommodating unit 100.

### INDUSTRIAL APPLICABILITY

The present invention can be applied to the energy storage apparatus including the energy storage device such as a lithium ion secondary battery.

### DESCRIPTION OF REFERENCE SIGNS

1, 1a, 1b: energy storage apparatus
2: shelf board
10: energy storage unit
11: energy storage device
11a: case
11b: positive electrode terminal
11c: negative electrode terminal
11d: spacer
12: bus bar frame
13: bus bar
13a, 30: cable
13b, 33, 34, 210, 220: connector
14: outer case body
15: outer case support
15a: bottom
15b, 15c, 17b, 17c: connection unit
16: substrate unit attaching unit
16a: first energy storage attaching unit
16b: wall
16c: second energy storage attaching unit
16d, 124: opening
17: outer case lid
17a: top surface
18: outer case
20: substrate unit
31: positive electrode power supply cable
32: negative electrode power supply cable
100: substrate accommodating unit
110: substrate holder
111: holder body
111a: first holder wall
111b: second holder wall
112: first substrate attaching unit
113: first holder attaching unit
114: upper-side attaching unit
114a: second substrate attaching unit
114b: second holder attaching unit
115: gripping unit
115a: inclined surface
115b: gripping unit recess
116: fixing unit
120: cover
121: cover body
121a: first cover wall
121b: second cover wall
122: first cover attaching unit
123: second cover attaching unit
123a: protrusion
125: cable disposing unit
125a: first recess
125b: opening and closing regulating unit
125c: inclined unit
125d: cable regulating unit
126: substrate regulating unit
127: rotation regulating unit
200: substrate
230: through-hole

## Claims

1. An energy storage apparatus that includes an energy storage unit including an energy storage device,
the energy storage apparatus comprising a substrate unit including a substrate electrically connected to the energy storage unit and a substrate accommodating unit accommodating the substrate, the substrate unit being attached to the energy storage unit,
wherein the substrate accommodating unit includes a gripping unit to grip the energy storage apparatus.

2. The energy storage apparatus according to claim 1, wherein the substrate unit is attached to an end in a longitudinal direction of the energy storage unit.

3. The energy storage apparatus according to claim 1 or 2, wherein at least a part of the gripping unit is disposed at a position closer to a bottom of the energy storage apparatus than at least a part of the energy storage unit.

4. The energy storage apparatus according to any one of claims 1 to 3, wherein a recess is formed in a surface facing the energy storage unit in the gripping unit.

5. The energy storage apparatus according to any one of claims 1 to 4, wherein the gripping unit includes an inclined surface inclined so as to be away from the energy storage unit toward the bottom of the energy storage apparatus in the surface facing the energy storage unit.

6. The energy storage apparatus according to any one of claims 1 to 5, wherein
the substrate accommodating unit includes a substrate holder that is disposed between the energy storage unit and the substrate to hold the substrate and a cover that is attached to the substrate holder, and
the cover includes a first cover attaching unit rotatably attached to the substrate holder.

7. The energy storage apparatus according to claim 6, wherein the first cover attaching unit is disposed at a position closer to the bottom of the energy storage apparatus than a center position of the cover.

8. The energy storage apparatus according to claim 6 or 7, wherein
the substrate holder includes a holder attaching unit to which the first cover attaching unit is attached, and
the first cover attaching unit is disposed in a direction from the cover toward the substrate holder with respect to the holder attaching unit.

9. The energy storage apparatus according to any one of claims 6 to 8, wherein the cover further includes a second cover attaching unit that is attached to the substrate holder by engaging with the substrate holder.

10. The energy storage apparatus according to any one of claims 6 to 9, wherein the cover includes a rotation regulating unit that restricts rotation with respect to the substrate holder.

11. The energy storage apparatus according to any one of claims 1 to 10, wherein
the substrate accommodating unit includes a substrate holder that is disposed between the energy storage unit and the substrate to hold the substrate, and
the substrate holder includes a first substrate attaching unit rotatably attached to the energy storage unit.

12. The energy storage apparatus according to claim 11, wherein the first substrate attaching unit is disposed at a position closer to the bottom of the energy storage apparatus than a center position of the substrate holder.

13. The energy storage apparatus according to claim 11 or 12, wherein
the energy storage unit includes an energy storage attaching unit to which the first substrate attaching unit is attached, and
the first substrate attaching unit is disposed at a position closer to the bottom of the energy storage apparatus than the energy storage attaching unit.

14. The energy storage apparatus according to any one of claims 11 to 13, wherein the substrate holder further includes a second substrate attaching unit that is attached to the energy storage unit by engaging with the energy storage unit.

15. The energy storage apparatus according to any one of claims 1 to 14, wherein
the substrate accommodating unit includes a substrate holder that holds the substrate, and
the substrate holder includes a fixing unit that fixes the substrate in a press-fitted state.

16. The energy storage apparatus according to claim 15, wherein
a through-hole is made in the substrate, and
the fixing unit is a protrusion that protrudes from an opposing surface of the substrate of the substrate holder and becomes thinner toward a tip portion, and fixes the substrate at a position separated from the opposing surface while being inserted and press-fitted into the through-hole.

17. The energy storage apparatus according to claim 15 or 16, wherein the fixing unit fixes the substrate in a posture in which a plate surface of the substrate faces a direction intersecting a vertical direction.

18. The energy storage apparatus according to any one of claims 15 to 17, wherein
the substrate accommodating unit includes a cover attached to the substrate holder, and
the cover includes a substrate regulating unit that regulates movement of the substrate in a direction toward the cover.

19. The energy storage apparatus according to claim 18, wherein
the cover is rotatably attached to the substrate holder, and
the substrate includes a connector at an end different from an end close to an axis about which the cover rotates with respect to the substrate holder.
